(19) Europäisches Patentamt
European Patent Office
Office européen des brevets

(11) **EP 4 517 697 B1**

(12) # EUROPEAN PATENT SPECIFICATION

(45) Date of publication and mention
of the grant of the patent:
**27.05.2026 Bulletin 2026/22**

(51) International Patent Classification (IPC):
**G06V 20/58** (2022.01)     **G06V 20/56** (2022.01)

(52) Cooperative Patent Classification (CPC):
**G06V 20/58; G06V 20/56**

(21) Application number: **23194552.8**

(22) Date of filing: **31.08.2023**

(54) **GENERATING OCCLUSION ATTRIBUTES FOR OCCLUDED OBJECTS**

ERZEUGUNG VON OKKLUSIONSATTRIBUTEN FÜR VERDECKTE OBJEKTE

GÉNÉRATION D'ATTRIBUTS D'OCCLUSION POUR DES OBJETS OCCLUS

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(43) Date of publication of application:
**05.03.2025 Bulletin 2025/10**

(73) Proprietor: **GM Cruise Holdings LLC
San Francisco, CA 94107 (US)**

(72) Inventors:
• **GRAZIOLI, FILIPPO
San Francisco, 94107 (US)**
• **MÖLLER, SVEN
San Francisco, 94107 (US)**
• **UNZUETA, MARC
San Francisco, 94107 (US)**
• **MEYER, MICHAEL
San Francisco, 94107 (US)**

(74) Representative: **Manitz Finsterwald
Patent- und Rechtsanwaltspartnerschaft mbB
Martin-Greif-Straße 1
80336 München (DE)**

(56) References cited:
US-A1- 2019 347 525     US-A1- 2020 250 514
US-A1- 2021 124 363     US-A1- 2023 256 993
US-B2- 11 508 049       US-B2- 11 592 831

• TSUN-HSUAN WANG ET AL: "V2VNet: Vehicle-to-Vehicle Communication for Joint Perception and Prediction", ARXIV.ORG, CORNELL UNIVERSITY LIBRARY, 201 OLIN LIBRARY CORNELL UNIVERSITY ITHACA, NY 14853, 17 August 2020 (2020-08-17), XP081742998
• WANG TSUN-HSUAN ET AL: "Supplementary Material -V2VNet: Vehicle-to-Vehicle Communication for Joint Perception and Prediction", 3 November 2020 (2020-11-03), XP093114769, Retrieved from the Internet <URL:https://static-content.springer.com/esm/chp%3A10.1007%2F978-3-030-58536-5_36/MediaObjects/504434_1_En_36_MOESM1_ESM.zip> [retrieved on 20231222]
• YEE RYAN ET AL: "Collaborative Perception for Automated Vehicles Leveraging Vehicle-to-Vehicle Communications", 2018 IEEE INTELLIGENT VEHICLES SYMPOSIUM (IV), IEEE, 26 June 2018 (2018-06-26), pages 1099 - 1106, XP033423334, DOI: 10.1109/IVS.2018.8500388

**Description**

BACKGROUND

Technical field

The present disclosure generally relates to autonomous vehicles (AVs) and, more specifically, to generating occlusion attributes about occluded objects in a surrounding of an AV.

Introduction

AVs, also known as self-driving cars, and driverless vehicles, may be vehicles that use multiple sensors to sense the environment and move without human input. Automation technology in AVs may enable vehicles to drive on roadways and to accurately and quickly perceive the vehicle's environment, including obstacles, signs, and traffic lights. Autonomous technology may utilize geographical information and semantic objects (such as parking spots, lane boundaries, intersections, crosswalks, stop signs, and traffic lights) for facilitating vehicles in making driving decisions. The vehicles can be used to pick-up passengers and drive the passengers to selected destinations. The vehicles can also be used to pick-up packages and/or other goods and deliver the packages and/or goods to selected destinations.
US 2019/347525 A1 discloses a method for simulating a sensor system includes checking whether an intersection of the first image and the second image exists and assessing whether or not the second virtual object is perspectively occluded. TSUN-HSUAN WANG ET AL discloses "V2VNet: Vehicle-to-Vehicle Communication for Joint Perception and Prediction", at ARXIV.ORG, CORNELL UNIVERSITY LIBRARY, 201 OLIN LIBRARY CORNELL UNIVERSITY ITHACA, NY 14853, on 17 August 2020.

SUMMARY

The invention is defined by a method for generating one or more occlusion attributes based on object information detected by a first vehicle and a second vehicle in a scene and a vehicle, the vehicle according to the independent claims. Preferred embodiments are defined in the dependent claims.

BRIEF DESCRIPTION OF THE DRAWINGS

The various advantages and features of the present technology will become apparent by reference to specific implementations illustrated in the appended drawings. A person of ordinary skill in the art will understand that these drawings show only some examples of the present technology and would not limit the scope of the present technology to these examples. Furthermore, the skilled artisan will appreciate the principles of the present technology as described and explained with additional specificity and detail through the use of the accompanying drawings.

FIGURE 1 illustrates objects that may be outside observable or perceivable areas for AVs in a first scene, according to some aspects of the disclosed technology.
FIGURE 2 illustrates objects that may be outside observable or perceivable areas for AVs in a second scene, according to some aspects of the disclosed technology.
FIGURE 3 illustrates an articulated bus that may be outside observable or perceivable areas for an AV in a third scene, according to some aspects of the disclosed technology.
FIGURES 4A-B depict a camera view from a first AV and a camera view from a second AV respectively, where both the first AV and the second AV are viewing the same scene, according to some aspects of the disclosed technology.
FIGURES 5A-B depict projection of a three-dimensional shape onto a two-dimensional camera space to determine a two-dimensional shape, according to some aspects of the disclosed technology.
FIGURES 6A-B depict projection of a three-dimensional shape corresponding to an occluded object onto a two-dimensional camera space to determine a two-dimensional shape corresponding to the occluded object, according to some aspects of the disclosed technology.
FIGURES 7A-B depict projection of a three-dimensional shape corresponding to a detected object onto a two-dimensional camera space to determine a two-dimensional shape corresponding to the detected object, according to some aspects of the disclosed technology.
FIGURE 8 depicts two overlapping two-dimensional shapes corresponding to the occluded object and the detected object respectively, according to some aspects of the disclosed technology.
FIGURE 9 illustrates an exemplary implementation of an AV stack of an AV having sensors, according to some aspects of the disclosed technology.

FIGURE 10 illustrates an exemplary implementation of an AV stack, according to some aspects of the disclosed technology.

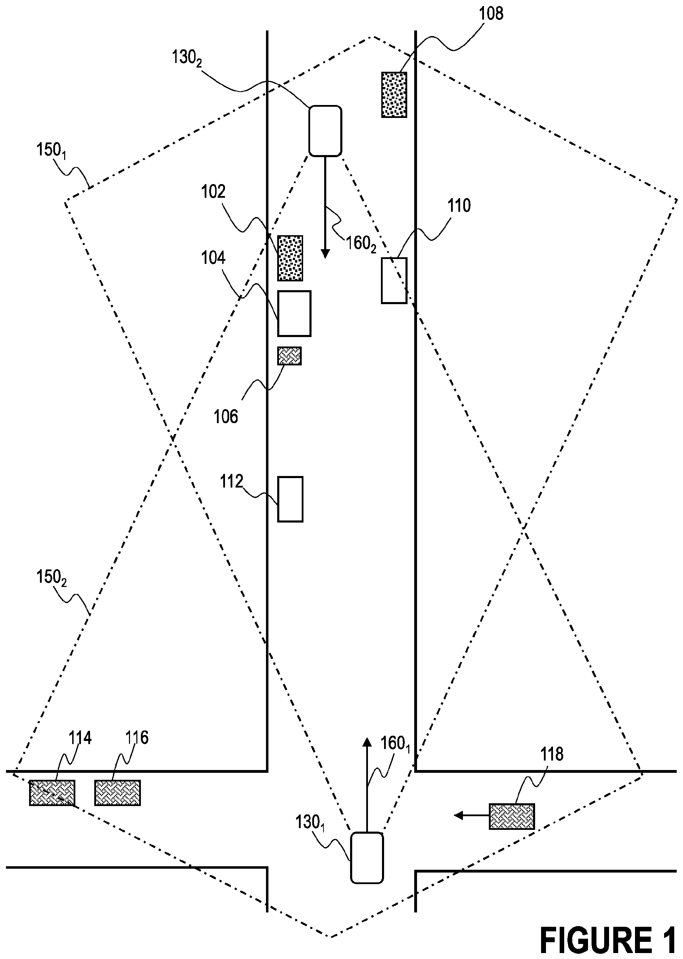

FIGURE 1 1 illustrates vehicle-to-vehicle communications between different vehicles in an area, according to some aspects of the disclosed technology.

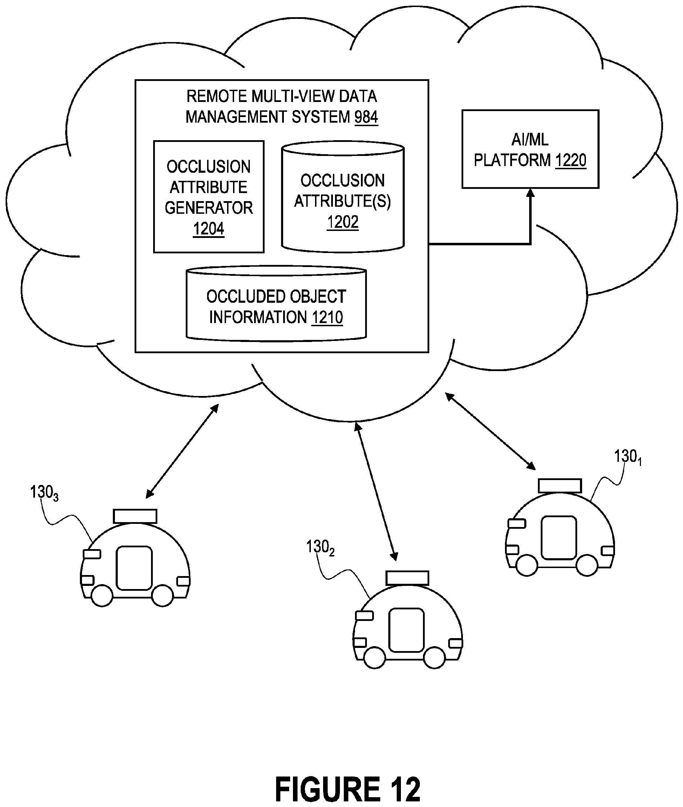

FIGURE 12 illustrates communications from vehicles to a remote multi-view data management system, according to some aspects of the disclosed technology.

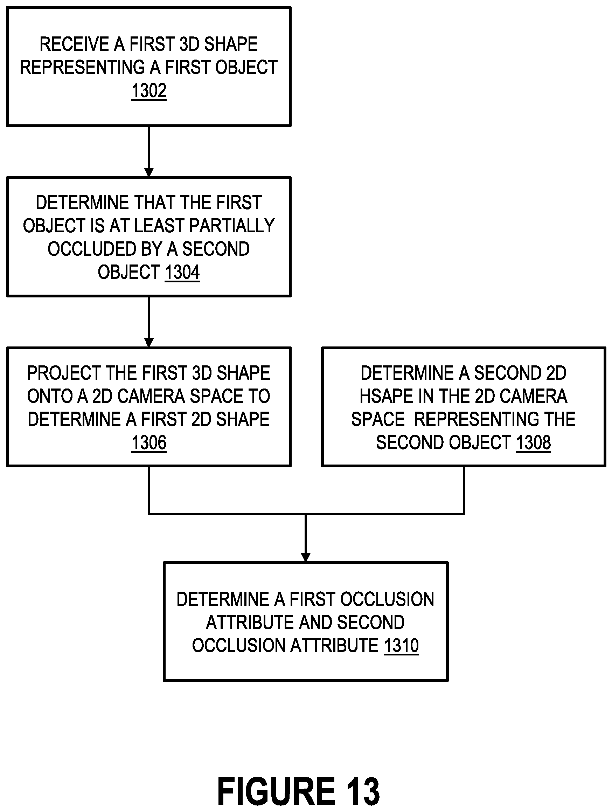

FIGURE 13 shows a flow diagram illustrating a method for generating one or more occlusion attributes based on object information detected by a first vehicle and a second vehicle in a scene, the first vehicle and the second vehicle being part of a fleet of vehicles, according to some aspects of the disclosed technology.

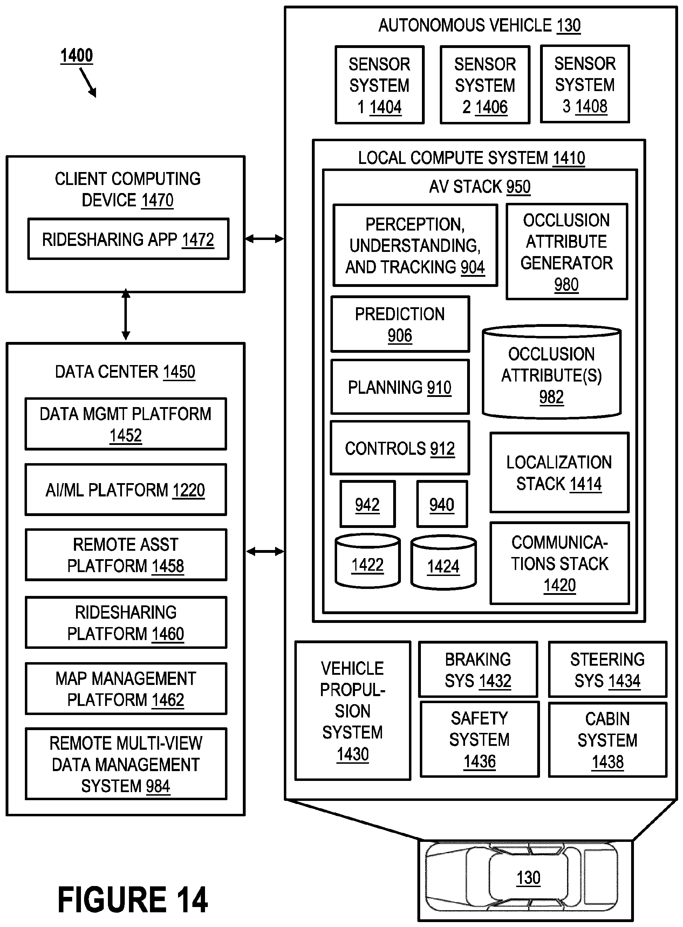

FIGURE 14 illustrates an exemplary system environment that may be used to facilitate fleet AV operations, according to some aspects of the disclosed technology.

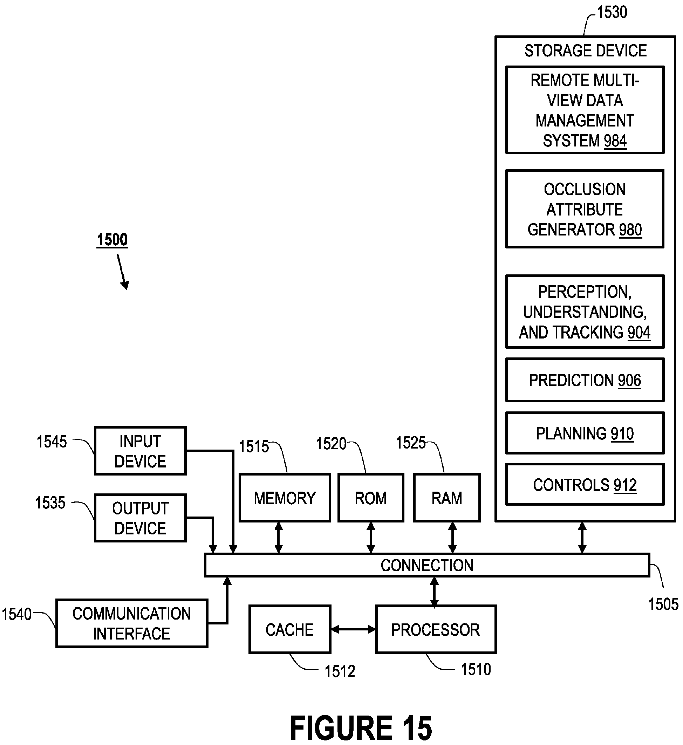

FIGURE 15 illustrates an exemplary computing system with which some aspects of the subject technology may be implemented.

## DETAILED DESCRIPTION

The detailed description set forth below is intended as a description of various configurations of the subject technology and is not intended to represent the only configurations in which the subject technology may be practiced. The appended drawings are incorporated herein and constitute a part of the detailed description. The detailed description includes specific details that provide a more thorough understanding of the subject technology. However, it will be clear and apparent that the subject technology is not limited to the specific details set forth herein and may be practiced without these details. In some instances, structures and components are shown in block diagram form to avoid obscuring the concepts of the subject technology.

## Overview

AVs can provide many benefits. For instance, AVs may have the potential to transform urban living by offering an opportunity for efficient, accessible, and affordable transportation. AVs utilize perception and understanding of objects on the road to predict behaviors of the objects, and to plan a trajectory for the vehicle. In some cases, an object in a scene may be occluded and undetected by an AV. However, a different AV viewing the same scene at the same time and/or at the same timestamp may detect the object. Some examples of such cases are illustrated with FIGURES 1-3.

A plurality of AVs in a fleet of AVs or a group of AVs may view the same scene from different points of views or different perspectives. With information from multiple views of the same scene, it is possible to detect various objects in the scene even when some of the objects may be occluded. In addition to detecting the various objects better than just relying on one view of the scene, the joint multi-view information from different AVs can be used to generate occlusion attributes about the occluded objects. The occlusion attributes can include relational occlusion information (e.g., which object is occluded by which other object(s)) and extent of occlusion (e.g., percentage of the object that is occluded from view).

Suppose, in a scene, a first AV does not detect a first object because a second object at least partially occludes the first object, but a second AV can detect the first object. The second AV can share a first three-dimensional shape that represents the first object (among other shapes representing other detected objects) with the first AV and/or a remote multi-view data management system that collects information from various AVs that may have views or perspectives of the same scene. The first AV may determine that the first object is occluded by the second object because the first AV does not detect the first object, even though the first object is within a detection range of the first AV. In some cases, the first AV may try to match objects detected by the second AV against objects detected by the first AV. Matched objects may suggest that some of the objects are not occluded and/or some of the objects may not be too severely occluded, since the first AV can detect these objects as well. The first AV may remove objects detected by the second AV that are outside the detection range of the first AV (e.g., objects that the first AV would not expect to detect, occluded or not). The first object may be unmatched and unfiltered, suggesting that the first object is occluded from view because the first object is within the detection range of the first AV but is not detected by the first AV.

The three-dimensional shape corresponding to the first object shared by the second AV can be projected onto a two-dimensional camera space of the first AV to obtain a two-dimensional shape that represents the first object. The two-dimensional shape in the two-dimensional camera space representing the second object may be determined. The two-dimensional shapes would overlap in the two-dimensional camera space, which may indicate that the first object is occluded by the second object for the first AV. The relational occlusion attribute indicating that the first object is occluded by the second object can be stored. Object identifiers (IDs) may be stored in a data structure to encode relational occlusion information. The extent of overlap may be quantitatively measured based on the two-dimensional shapes.

The framework can be implemented in a remote multi-view data management system that collects information gathered by a fleet/group of AVs, such as the first AV and the second AV mentioned above. Detected objects (e.g., three-dimensional shapes that represent the detected objects) from the first AV and the second AV seeing a same scene from different points of view can be sent to the remote multi-view data management system. The shapes corresponding to the detected objects can be translated from various local reference frames of the AVs to a common reference frame shared by the fleet or group. Translation between local reference frames and common reference frames may include adding and/or subtracting one or more offsets based on the differences in the origins of the reference frames. Detected objects by the second AV may be matched against detected objects by the first AV. Unmatched objects that are outside the detection range of the first AV may be filtered out. Unmatched and unfiltered objects can be flagged as occluded objects outside of a field of perceivable area of the first AV, and occlusion attributes can be generated for the data collected by the first AV. The resulting occlusion attributes can be included as part of the labeled data that can be used to train machine learning algorithms.

For the first AV that is driving on the road, having knowledge of the occluded object and the occlusion attributes can improve the performance of perception, understanding, tracking, prediction, and/or planning algorithms. Various algorithms can take the additional information into account and may treat objects in the scene differently when equipped with additional information. The additional information may cause the algorithms to generate inferences with higher confidence. The additional information may allow the algorithms to better handle uncertainty (or reduce uncertainty) in the scene, even with objects that are occluded. The additional information may allow the first AV to see occluded objects in advance and plan a trajectory better with foresight. The additional information may cause the algorithms to pay more attention to objects which are occluded.

For the algorithms, occlusion attributes can be generated from the multi-view data and included as part of labeled data for machine learning training. The models in the algorithms can learn to better handle occluded objects with improved labeled data. Occlusion attributes can be used to train perception and understanding algorithms (e.g., the algorithms can learn to detect occluded objects, even when the object class is unknown). Occlusion attributes can be used to train tracking algorithms, planning algorithms, and uncertainty models. Uncertainty can be induced by the lack of perception signals and incorporating reliable occlusion attribute(s) can greatly improve accuracy of the algorithm. When evaluating the performance of the models, the recall can be improved with the occlusion attributes, because the number of detectable objects can be increased. Alternatively, the number of objects that are meant to be detected may be reduced based on the occlusion attributes. Highly occluded objects may be considered optional and not penalized if the objects are not detected. When training the models, missed objects may cause the model to be penalized less based on the extent of the occlusion. For example, if an object was not detected or an inference about the object was erroneous, and the object is more than X% (e.g., X=75, X=80, X=90, X=95, etc.) occluded, the error may be discounted by half or another suitable amount when computing the loss function.

Relative to human-labeled data, the labeled data with generated occlusion attributes can be superior in various ways. Human-labeled data may be unreliable, since they rely on human labelers to check in the camera space and point cloud space whether there are occluded objects and classify or annotate the occlusion with discrete labels such as non-occluded, fully occluded, partially occluded, or truncated. These discrete labels may be limited to static (non-moving) objects in the scene only. Human labeling is slow, costly, and susceptible to human errors. Objects which are fully occluded and not visible in camera and/or the point cloud space would not be annotated at all, since human labelers may rely on a single view of the scene and would not be aware of such objects.

Various embodiments herein and their advantages may apply to a wide range of vehicles and fleets having a variety of different types of vehicles, (e.g., fully autonomous vehicles, semiautonomous vehicles, vehicles with driver-assist functionalities, mapping vehicles, sensor data collection vehicles, simulated vehicles operating in simulated environments, etc.), and not just AVs. Vehicles may include passenger-carrying or cargo-carrying vehicles in the field of transportation. Vehicles may include wheeled vehicles, flight vehicles, aquatic vehicles, amphibious vehicles, vehicles on treads, vehicles on tracks or rails, military vehicles, etc.

<u>Exemplary situations where objects may be outside an observable or perceivable area</u>

In dense urban areas, there may be many situations in which objects on the road are fully outside of an observable or perceivable area of the sensors of the AV (herein, such objects are considered at least partially occluded objects). Some objects may be occluded by structures, buildings, or other objects. Some objects may be unobservable or imperceivable due to atmospheric or weather conditions (e.g., steam, smoke, rain, snow, fog, etc.). Some objects may not be visible to the sensors or detectable by the sensors for other reasons (e.g., camera lens glare, dirt on sensors, tampering with the sensors, etc.). Not being able to observe certain objects in an area can affect how well or how confidently the AV can navigate in the area. Not being able to observe certain objects may impact how well the AV can predict behaviors of objects in the area (including objects which are observable or perceivable). Objects which may be outside of an observable or perceivable area may include: static objects (objects that are not moving), dynamic objects (objects that are moving), small objects (e.g., pets/animals, pedestrians), objects with high velocity, objects with erratic behavior, objects lying on the ground, debris on the road, objects with high velocity near an intersection with tall buildings. Objects that can occlude another object may include a roadway, a fixed structure (e.g., a building) in the scene or near an intersection, a road user (e.g., vehicles, pedestrians, animals, etc.), a road object (e.g., debris, trash cans, traffic cones, road barricades), etc.

A fleet or group of AVs may operate in a dense urban area where a plurality of AVs may be near or within an area or geographical area of the dense urban area at the same time or during a same short time period. Multiple AVs viewing the same scene (e.g., at the same time stamp or at the same time) from different views or perspectives offers a unique opportunity to leverage the multi-view data to identify objects that may be outside an observable or perceivable area for an AV viewing the same scene.

FIGURE 1 illustrates objects that may be outside observable or perceivable areas for AVs in a first scene, according to some aspects of the disclosed technology. In the first scene, AV $130_1$ and AV $130_2$ are operating within an area or geographical area and may have different views or perspectives of the first scene (e.g., at the same timestamp or at the same time). Two AVs are illustrated but it is envisioned by the disclosure that more than two AVs may be operating in the area. Arrow $160_1$ illustrates a direction of travel for AV $130_1$. Arrow $160_2$ illustrates a direction of travel for AV $130_2$.

AV $130_1$ may query other AVs in the fleet or group, e.g., AV $130_2$, within a certain area of interest for information about objects detected by other AVs. An exemplary area of interest for AV $130_1$ is shown as region $150_1$. Similarly, AV $130_2$ may have an area of interest including region $150_2$. AV $130_2$ may query other AVs in the fleet or group, e.g., AV $130_1$, within a certain area of interest for information about objects detected by other AVs.

The area of interest may be defined based on a radius from the location of an AV (e.g., AV $130_1$, and AV $130_2$). For example, the area of interest may include a circular region defined based on the radius encompassing 360 degrees surrounding the AV. In some cases, the area of interest may be defined based on the maneuver that an AV is performing. For example, if an AV is driving forward normally, the area of interest may include a conical or semi-circular region defined based on the radius encompassing 180 degrees or less than 180 degrees in front of the AV. In another example, if an AV is performing a pullover maneuver and/or a parking maneuver, the area of interest may include a circular region defined based on the radius encompassing 360 degrees surrounding the AV. In some cases, the area of interest may be defined based on the direction of travel of the AV and optionally the velocity of the AV, so that the area of interest may include a region in front of the AV $130_1$ based on a distance in front of the AV. The distance in front of the AV may be longer if the velocity of the AV is higher. The area of interest may be defined based on a characteristic of the location of an AV. The area of interest may be larger if the AV $130_1$ is located near or at an intersection. The area of interest may be larger if the AV is about to approach or arrive at an intersection. The area of interest may be larger if AV is about to approach or arrive at an area with a hill where objects on the other side of the hill may often be occluded. The area of interest may be larger if the AV is about to approach a blind turn or blind corner. The area of interest may be larger if the AV is located in an urban area (as opposed to a suburban area or rural area). The area of interest may be larger if the speed limit at the location of the AV is higher. The area of interest may be larger if a number of tracked objects surrounding the AV is higher. The area of interest may be defined based on a combination of factors or a weighted combination of factors.

AV $130_1$ may have several objects within an observable or perceivable area for the sensors of AV $130_1$. AV $130_1$ may have detected object 114, object 116, object 118, object 112, object 106, object 104, and object 110 based on sensor data generated by sensors of AV $130_1$. AV $130_1$ may have detected AV $130_2$ based on sensor data generated by sensors of AV $130_1$. For AV $130_1$, object 102 and object 108 may be outside of an observable or perceivable area for the sensors of AV $130_1$. Object 102 (e.g., a parked vehicle) may be occluded by object 104. Object 108 (e.g., a parked vehicle) may be occluded by object 110. AV $130_1$ may benefit from receiving information about object 102 and object 108 from another AV, such as AV $130_2$. The information may assist AV $130_1$ in determining expected behaviors of object 102 and object 108 (and other objects as well, if other objects may behave differently in the presence of object 102 and object 108) as AV $130_1$ drives forward. The information may allow AV $130_1$ to generate occlusion attributes for object 102 and object 108 for one or more algorithms running on AV $130_1$.

AV $130_2$ may have several objects within an observable or perceivable area for the sensors of AV $130_2$. AV $130_2$ may have detected object 108, object 110, object 102, object 104, object 112. based on sensor data generated by sensors of AV $130_1$. AV $130_2$ may have detected AV $130_1$ based on sensor data generated by sensors of AV $130_2$. For AV $130_2$, object 106, object 114, object 116, and object 118 may be outside of an observable or perceivable area for the sensors of AV $130_2$. Object 106 (e.g., an idling motorcycle) may be occluded by object 104. Object 114 and object 116 (e.g., parked vehicles) may be occluded by building structures. Object 118 (e.g., a moving vehicle) may be occluded by building structures. AV $130_2$ may benefit from receiving information about object 106, object 114, object 116, and object 118 from another AV, such as AV $130_1$. The information may assist AV $130_2$ in determining expected behaviors of object 106, object 114, object 116, and object 118 (and other objects as well, if other objects may behave differently in the presence of these objects) as AV $130_2$ drives forward and through the intersection. The information may allow AV $130_2$ to generate occlusion attributes for object 106, object 114, object 116, and object 118 for one or more algorithms running on AV $130_2$.

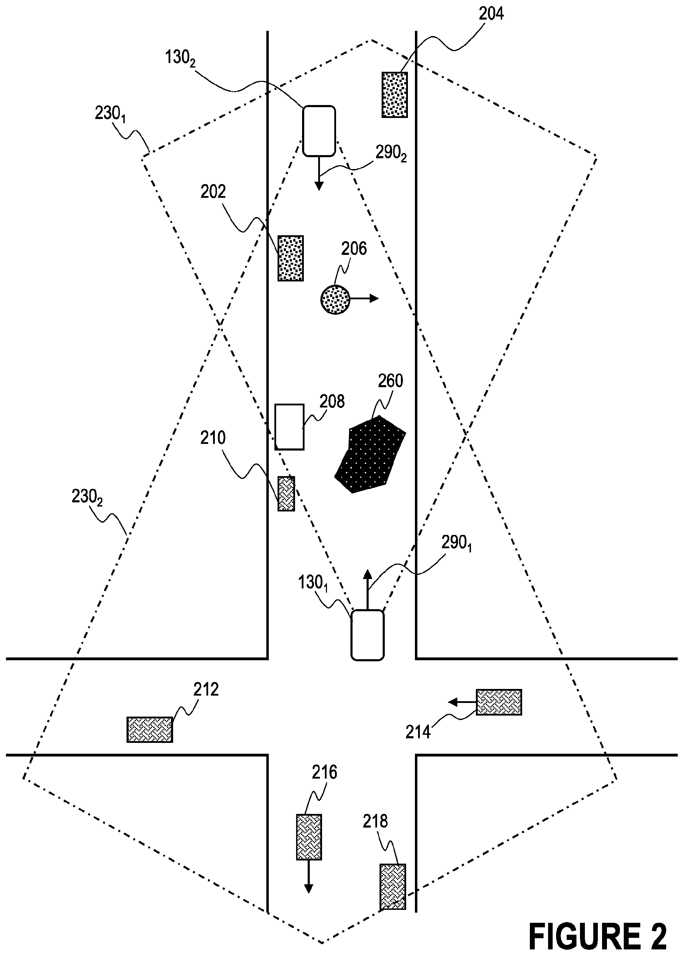

FIGURE 2 illustrates objects that may be outside observable or perceivable areas for AVs in a second scene, according to some aspects of the disclosed technology. In the second scene, AV $130_1$ and AV $130_2$ are operating within an area or geographical area and may have different views or perspectives of the second scene (e.g., at the same timestamp or at the same time). Two AVs are illustrated but it is envisioned by the disclosure that more than two AVs may be operating in the area. Arrow $290_1$ illustrates a direction of travel for AV $130_1$. Arrow $290_2$ illustrates a direction of travel for AV $130_2$.

AV $130_1$ may query other AVs in the fleet, e.g., AV $130_2$, within a certain area of interest for information about objects detected by other AVs. The area of interest may be defined in a same or similar manner as the first scene in FIGURE 1. An exemplary area of interest for AV $130_1$ is shown as region $230_1$. Similarly, AV $130_2$ may have an area of interest including region $230_2$. AV $130_2$ may query other AVs in the fleet, e.g., AV $130_1$, within a certain area of interest for information about objects detected by other AVs.

AV $130_1$ may have several objects within an observable or perceivable area for the sensors of AV $130_1$. AV $130_1$ may have detected object 212, object 214, object 216, object 218, object 210, object 208, and object 260 based on sensor data generated by sensors of AV $130_1$. For AV $130_1$, AV $130_2$, object 202, object 204, and object 206 may be outside of an observable or perceivable area for the sensors of AV $130_1$. Object 202 (e.g., a parked vehicle), object 204 (e.g., a parked vehicle), and object 206 (e.g., a pedestrian crossing the road) may be occluded by object 260. AV $130_2$ may be occluded by object 260 (e.g., oversized truck). AV $130_1$ may benefit from receiving information about AV $130_2$, object 202, object 206, and object 204 from another AV, such as AV $130_2$. The information may assist AV $130_1$ in determining expected behaviors of AV $130_2$, object 202, object 206, and object 204 (and other objects as well, if other objects may behave differently in the presence of AV $130_2$, object 202, object 206, and object 204) as AV $130_1$ drives forward. The information may allow AV $130_1$ to generate occlusion attributes for AV $130_2$, object 202, object 206, and object 204 for one or more algorithms running on AV $130_1$.

AV $130_2$ may have several objects within an observable or perceivable area for the sensors of AV $130_2$. AV $130_2$ may have detected object 202, object 206, object 204, object 208, and object 260. based on sensor data generated by sensors of AV $130_1$. For AV $130_2$, AV $130_1$, object 210, object 212, object 216, object 218, and object 214 may be outside of an observable or perceivable area for the sensors of AV $130_2$. Object 210 (e.g., a bicycle) may be occluded by object 208. Object 212 (e.g., parked vehicle) may be occluded by building structures. Object 214 (e.g., a moving vehicle) may be occluded by building structures. Object 216 (e.g., a moving vehicle) and object 218 (e.g., a parked vehicle) may be occluded or obstructed due to a hill. AV $130_1$ may be occluded by object 260 (e.g., oversized truck). AV $130_2$ may benefit from receiving information about AV $130_1$, object 212, object 214, object 216, object 218, and object 210 from another AV, such as AV $130_1$. The information may assist AV $130_2$ in determining expected behaviors of AV $130_1$, object 212, object 214, object 216, object 218, and object 210 (and other objects as well, if other objects may behave differently in the presence of these objects) as AV $130_2$ drives forward and through the intersection. The information may allow AV $130_2$ to generate occlusion attributes for AV $130_1$, object 212, object 214, object 216, object 218, and object 210 for one or more algorithms running on AV $130_2$.

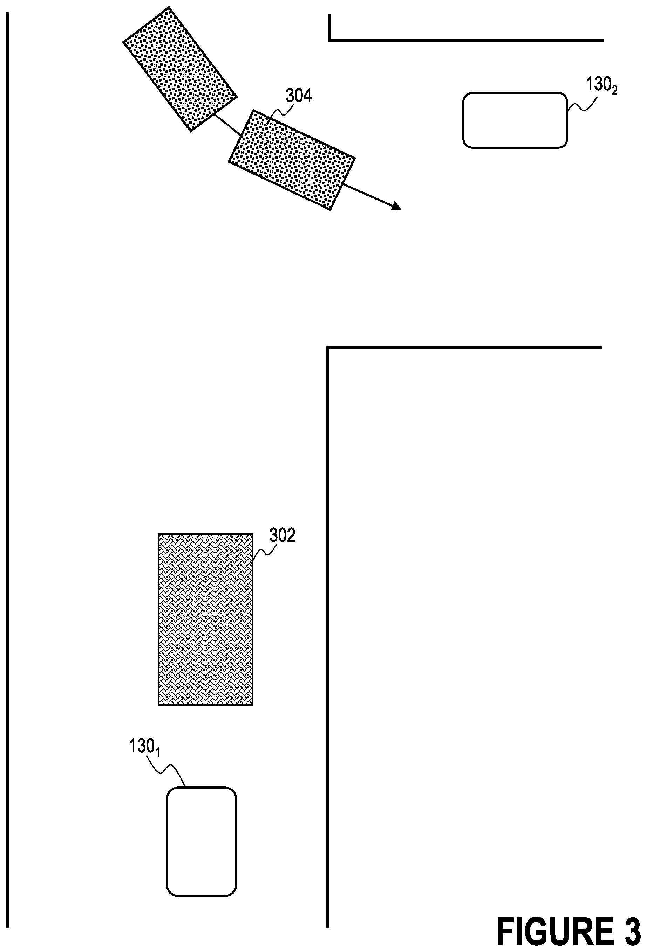

FIGURE 3 illustrates an articulated bus that may be outside observable or perceivable areas for an AV in a third scene, according to some aspects of the disclosed technology. In the third scene, AV $130_1$ and AV $130_2$ are operating within an area or geographical area and may have different views or perspectives of the third scene (e.g., at the same timestamp or at the same time). Two AVs are illustrated but it is envisioned by the disclosure that more than two AVs may be operating in the area.

AV $130_1$ may query other AVs in the fleet, e.g., AV $130_2$, within a certain area of interest for information about objects detected by other AVs. AV $130_2$ may query other AVs in the fleet, e.g., AV $130_1$, within a certain area of interest for information about objects detected by other AVs. The area of interest may be defined in a same or similar manner as the first scene in FIGURE 1.

AV $130_1$ may have several objects within an observable or perceivable area for the sensors of AV $130_1$. AV $130_1$ may have detected object 302 based on sensor data generated by sensors of AV $130_1$. For AV $130_1$, AV $130_2$, object 304 may be (at least partially) outside of an observable or perceivable area for the sensors of AV $130_1$. Object 304 (e.g., an articulated bus), may be at least partially occluded by object 302 (e.g., a delivery truck). AV $130_2$ may be occluded by a building structure near the intersection. AV $130_1$ may benefit from receiving information about AV $130_2$, and object 304 from another AV, such as AV $130_2$. The information may assist AV $130_1$ in determining expected behaviors of AV $130_2$, and object 304 as AV $130_1$ drives forward and crosses the intersection. The information may allow AV $130_1$ to generate occlusion attributes for AV $130_2$, and object 304 for one or more algorithms running on AV $130_1$. Having information about object 304 (e.g., the articulated bus) can improve the algorithms that are tracking and predicting the behavior of object 304.

AV $130_2$ may have several objects within an observable or perceivable area for the sensors of AV $130_2$. AV $130_2$ may have detected object 304 based on sensor data generated by sensors of AV $130_1$. For AV $130_2$, AV $130_1$, and object 302 may be outside of an observable or perceivable area for the sensors of AV $130_2$. Object 302 (e.g., a delivery truck) may be occluded by a building structure near the intersection. AV $130_1$ may be occluded by the building structure. AV $130_2$ may benefit from receiving information about AV $130_1$, and object 302 from another AV, such as AV $130_1$. The information may assist AV $130_2$ in determining expected behaviors of AV $130_1$, and object 302 as AV $130_2$ drives forward and through the intersection. The information may allow AV $130_2$ to generate occlusion attributes for AV $130_1$, and object 302 for one or more algorithms running on AV $130_2$.

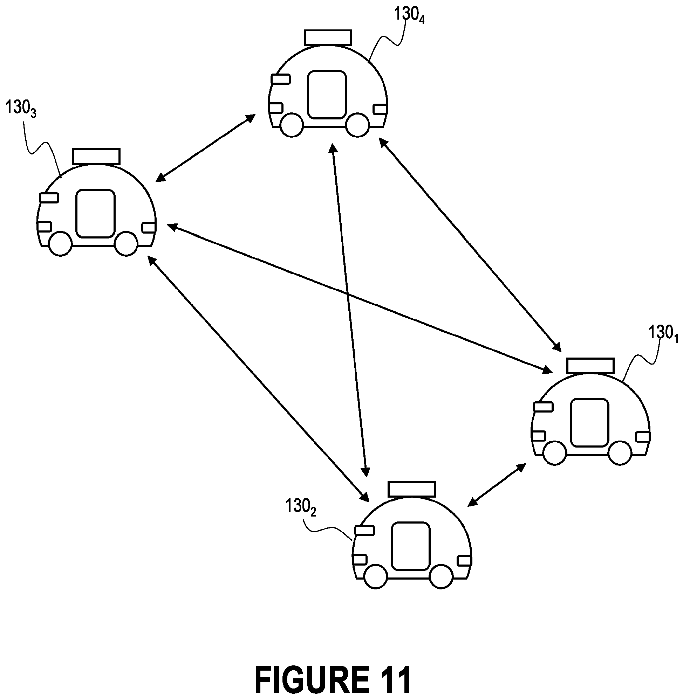

For FIGURES 1-3, AV $130_1$ and AV $130_2$ may share information with each other to facilitate online generation of occlusion attributes. An illustration is shown in FIGURE 11. AV $130_1$ and AV $130_2$ may share information with a remote multi-view data management system to facilitate offline generation of occlusion attributes, which may then be used in testing and training of algorithms that may be running on the AVs. An illustration is shown in FIGURE 12.

Examples illustrating how to identify an occluded object from multi-view data and generate occlusion attributes

The information shared between AVs can be used to generate occlusion attributes, which can be used to positively impact operations of an AV. The shared information can form multi-view data of the scene seen by different AVs. The shared information can allow occluded objects to be detected, and occlusion attributes to be extracted. A first AV and a second AV can be a part of a fleet of vehicles that are operable to share information with each other. One or more occlusion attributes can be generated based on object information detected by the first AV and the second AV in a scene (e.g., the multi-view data). The first AV may detect a first object in the scene, whereas the second AV may not detect the first object in the scene (e.g., because the first object is occluded by a second object). The second AV can receive object information representing one or more objects in a scene from the first AV.

In some cases, the second AV can receive three-dimensional shapes representing objects in the scene from the first AV. The three-dimensional shapes may be determined by the first AV. The three-dimensional shapes can represent tracked objects detected by the first AV. The second AV can determine, based on the three-dimensional shapes, objects detected by the first AV. The second AV may have a set of three-dimensional shapes representing tracked objects detected by the second AV. The second AV can match the three-dimensional shapes representing tracked objects detected by the first AV against the three-dimensional shapes representing tracked objects detected by the second AV. Matching can include determining whether two three-dimensional shapes are likely to correspond to the same object in the scene. Matched three-dimensional shapes mean that the object is likely not occluded from view for the second AV. Three-dimensional shapes representing tracked objects detected by the first AV that have a match in the three-dimensional shapes representing tracked objects detected by the second AV may be discarded from consideration or further processing to extract occlusion attributes. In some cases, some of the three-dimensional shapes representing tracked objects detected by the first AV may be outside a detection range of the second AV (e.g., an area where sensors of the second AV may never expect to detect objects). The second AV may determine, based on the three-dimensional shapes received from the first AV, at least one of the three-dimensional shapes representing tracked objects detected by the first AV may be outside a detection range of the second AV. The three-dimensional shapes representing tracked objects detected by the first AV outside a detection range of the second AV may be discarded from consideration or further processing to extract occlusion attributes.

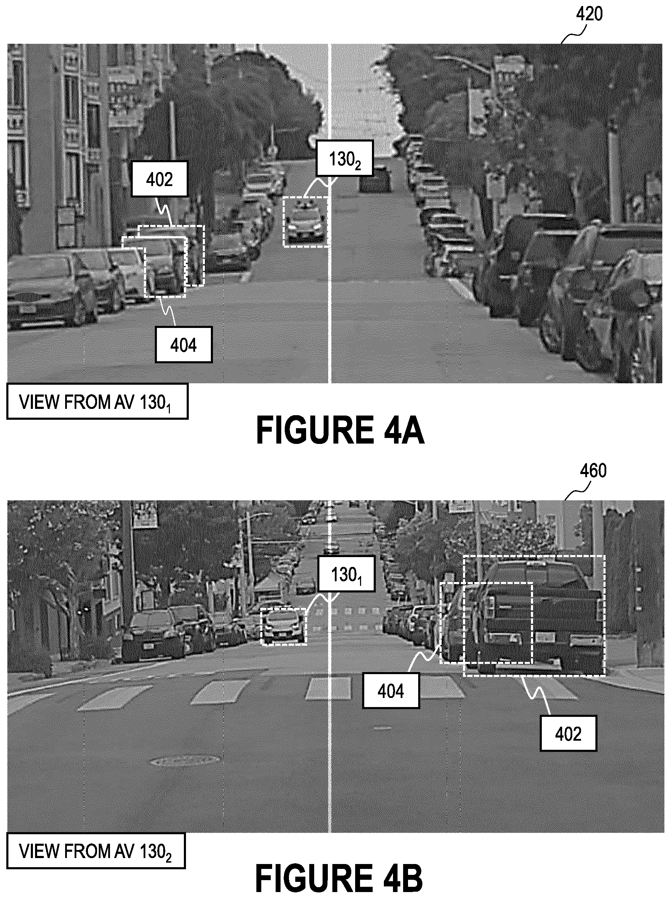

The second AV can receive object information from the first AV, and the object information can include a first three-dimensional shape representing a first object in the scene. The object information, including the first three-dimensional shape can be determined by the first AV (e.g., determined by the AV stack running on the first AV). The first object may be within a first field of the perceivable area of one or more sensors of the first AV (e.g., the first object is not occluded and/or the first object is detected by the first AV). The first object may be outside a second field of perceivable area of the one or more sensors of the second AV. The second AV may determine that the first object is at least partially occluded. In some cases, the second AV may determine that the first object is at least partially occluded by determining from the first three-dimensional shape corresponding to the first object that the first object has not been detected by the second AV (e.g., the first three-dimensional shape does not match any one of the three-dimensional shapes tracked by the second AV). The second AV may determine that the first object is at least partially occluded by a second object. The second object may be within the second field of the perceivable area of the one or more sensors of the second AV. The second AV can use object information received from the first AV and object information determined in the second AV to determine occlusion attributes for the first object. The second AV can project the first three-dimensional shape onto a two-dimensional camera space of the second AV to determine a first two-dimensional shape representing the first object. The second AV can determine a second two-dimensional shape representing the second object in the two-dimensional camera space of the second AV. The second AV can store a first occlusion attribute indicating that the first object is occluded by at least the second object. The second AV can store a second occlusion attribute indicating an extent of which the second two-dimensional shape is within the area of the first two-dimensional shape. FIGURES 4-8 illustrate some exemplary techniques for determining occlusion attributes.

FIGURES 4A-B depict a camera view 420 from AV $130_1$ and a camera view 460 from a AV $130_2$ respectively, where both the AV $130_1$ and the AV $130_2$ are viewing the same scene, according to some aspects of the disclosed technology. In FIGURE 4A, the camera view 420 represents at least a part of a first field of perceivable area for a camera on AV $130_1$. In FIGURE 4B, the camera view 460 represents at least a part of a first field of perceivable area for a camera on AV $130_2$.

AV $130_1$ and/or AV $130_2$ may have more than one camera (e.g., four cameras with different detection ranges that may or may not overlap each other). For simplicity, one camera view is depicted for an AV. AV $130_1$ and/or AV $130_2$ may have one or more detection and range sensors such as one or more of radio detection and ranging (RADAR) sensors, light detection and ranging (LIDAR) sensors, and ultrasonic sensors. The detection and range sensors may generate data such as point clouds or depth maps, that may indicate the presence of an object at a certain distance and optionally a speed of the object.

The point clouds or depth maps, images from the camera, and optionally other sensor data, may allow AV $130_1$ and/or AV $130_2$ to generate three-dimensional shapes that represent detected objects and/or tracked objects in the surroundings of AV $130_1$ and/or AV $130_2$. In cases where AV $130_1$ and/or AV $130_2$ may not have detection and range sensors, the three-dimensional shapes may be generated from camera images (e.g., video of the camera images). A three-dimensional shape can roughly represent the occupancy of a detected or tracked object in three-dimensional space. AV $130_1$ and/or AV $130_2$ may maintain a collection of detected or tracked objects (e.g., a collection of three-dimensional shapes). The three-dimensional shapes maintained by an AV may be defined using a local reference frame of that AV (e.g., local coordinate system where the AV is the origin point of the system). A fleet of AVs, including AV $130_1$ and AV $130_2$, can have a shared common reference frame (e.g., a common coordinate system where a fixed location on Earth or within the operational design domain is the origin point of the system).

Referring to FIGURE 4A, AV $130_1$ may have detected or tracked, among other things, AV $130_2$, and object 404. AV $130_1$ may determine three-dimensional shapes and other object information that correspond to AV $130_2$, and object 404. AV $130_2$, and object 404 may be considered within the first field of view of the perceivable area of the camera of AV $130_1$. However, object 404 (e.g., a pickup truck) may be occluded by object 404, and AV $130_1$ may not have detected object 402. In some cases, AV $130_1$ may have detected object 402 but with low confidence that object 402 is present and/or with little or imprecise information about object 402 (e.g., no motion model, no object classification, no object attributes, no precise location, no precise three-dimensional shape, etc.).

Referring to FIGURE 4B, AV $130_2$ may have detected or tracked, among other things, AV $130_1$, object 402, and object 404. AV $130_1$ may determine three-dimensional shapes and other object information that correspond to AV $130_2$, object 402, and object 404. AV $130_2$, object 402, and object 404 may be considered within the second field of view of the perceivable area of the camera of AV $130_2$. Because AV $130_2$ views the same scene as AV $130_1$, but from a different perspective, AV $130_2$ may detect or track an object within the second field of view of perceivable area of the camera of AV $130_2$ that AV $130_1$ does not, and the object may appear occluded or fall outside the first field of view of perceivable area of the camera of AV $130_2$.

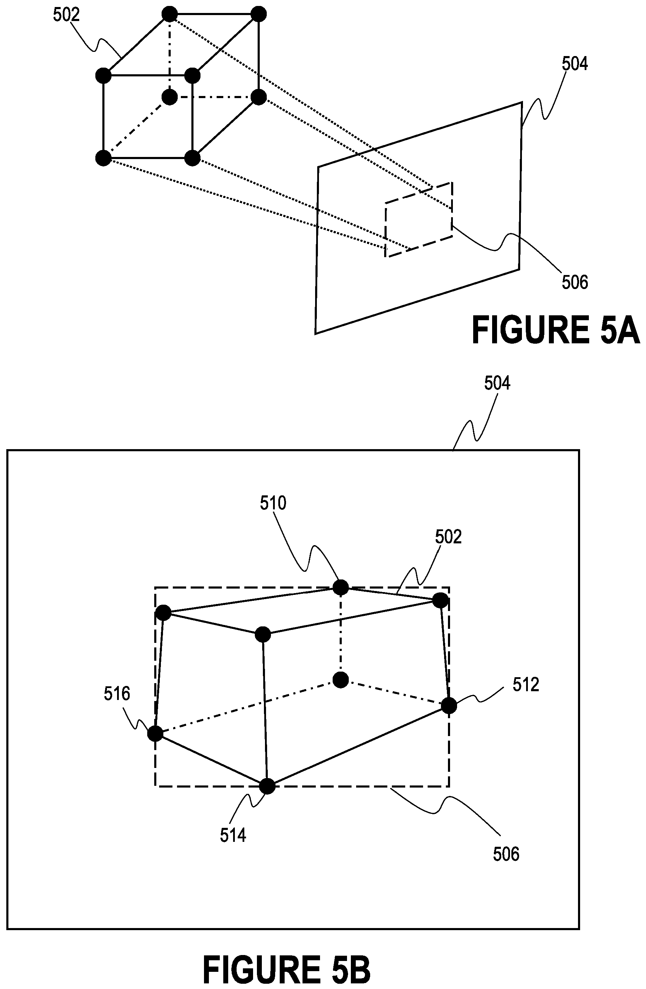

FIGURES 5A-B depict projection of a three-dimensional shape 502 onto a two-dimensional camera space 504 of a camera of a vehicle to determine a two-dimensional shape 506, according to some aspects of the disclosed technology. An exemplary three-dimensional shape 502 corresponding to an exemplary detected or tracked object is depicted. Three-dimensional shape 502 may be a shoebox-like shape. Three-dimensional shape 502 may be a hexahedron. Other examples of three-dimensional shape 502 may include cuboid, sphere, cone, cylinder, etc. The three-dimensional shape 502 may include coordinate information in a local reference frame of the AV that may have detected or tracked the object. The three-dimensional shape 502 may include coordinate information in a common reference frame shared by a fleet of AVs. In some cases, (coordinate information) of the three-dimensional shape 502 is first received and defined in a common reference frame shared by a fleet of AVs, and the (coordinates information) is translated to a local reference frame of the AV that has captured the camera image (the AV to which the two-dimensional camera space belongs). An exemplary two-dimensional camera space 504 is depicted. The two-dimensional camera space 504 may correspond to a pixel space of an image captured by a camera of the AV. The two-dimensional camera space 504 may correspond to a perspective of a camera of the AV that captured the image (e.g., how the camera views the surroundings of the AV). The camera may have a (computed) camera projection matrix, which is based on intrinsic and/or extrinsic parameters of the camera. The camera projection matrix can translate between coordinates in the three-dimensional space (e.g., the coordinate system of the three-dimensional shape 502) to the two-dimensional camera space 504 (e.g., pixel space). By applying the camera projection matrix, coordinates of the three-dimensional shape 502 (e.g., outer corners of the hexahedron) representing the object can be projected onto the two-dimensional camera space 504 so that two-dimensional shape 506 representing the object can be determined. For example, the outer points of the three-dimensional shape 502 can be ray-traced onto coordinates in the two-dimensional camera space 504. Exemplary ray-traced coordinates are shown as point 510, point 512, point 514, and point 516 in the two-dimensional camera space 504. The ray-traced coordinates on the two-dimensional camera space 504 can be used to define boundary points of the two-dimensional shape 506. The two-dimensional shape 506 can represent (roughly) where the object is located and occupies in the two-dimensional camera space 504. In the example shown, the most outer ray-traced coordinates (e.g., point 510, point 512, point 514, and point 516) can define boundaries of the two-dimensional shape 506, e.g., two-dimensional bounding box. The two-dimensional shape 506 can be a polygon. Other examples of two-dimensional shape 506 can include rectangle, circle, oval, and blob (irregular) shape. The contour of the two-dimensional shape 506 in the two-dimensional camera space 504 may depend on the three-dimensional shape 502.

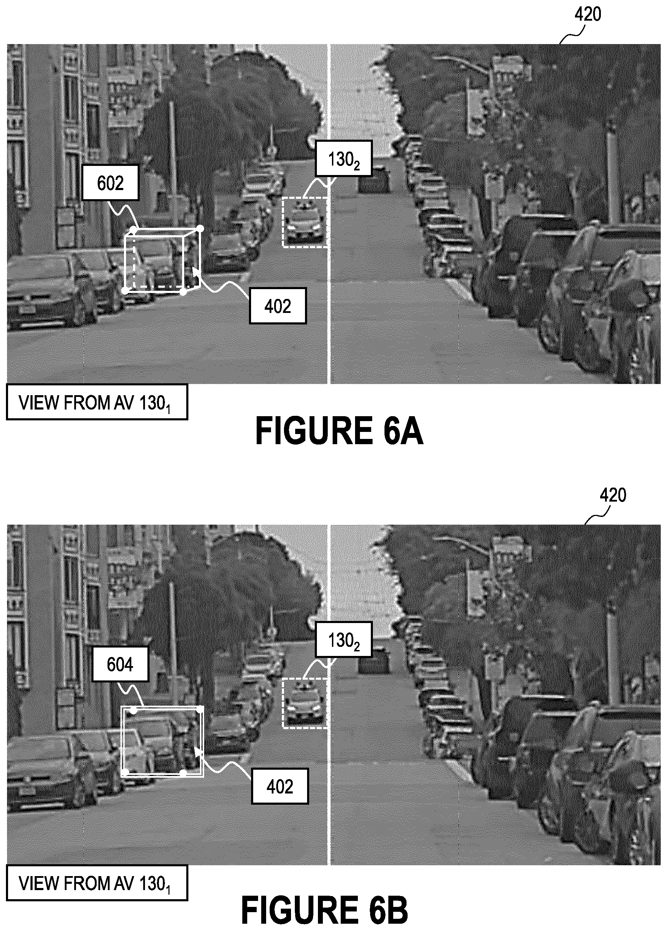

FIGURES 6A-B depict projection of a three-dimensional shape 602 corresponding to an occluded object 402 onto a two-dimensional camera space (shown as a camera view 420 from AV $130_1$) to determine a two-dimensional shape 604 corresponding to the occluded object 402, according to some aspects of the disclosed technology. Three-dimensional shape 602 (e.g., a hexahedron) corresponding to object 402 is shown in FIGURE 6A. Two-dimensional shape 604 (e.g., a rectangular bounding box) in the two-dimensional camera space, or camera view 420 from AV $130_1$ is shown in FIGURE 6B.

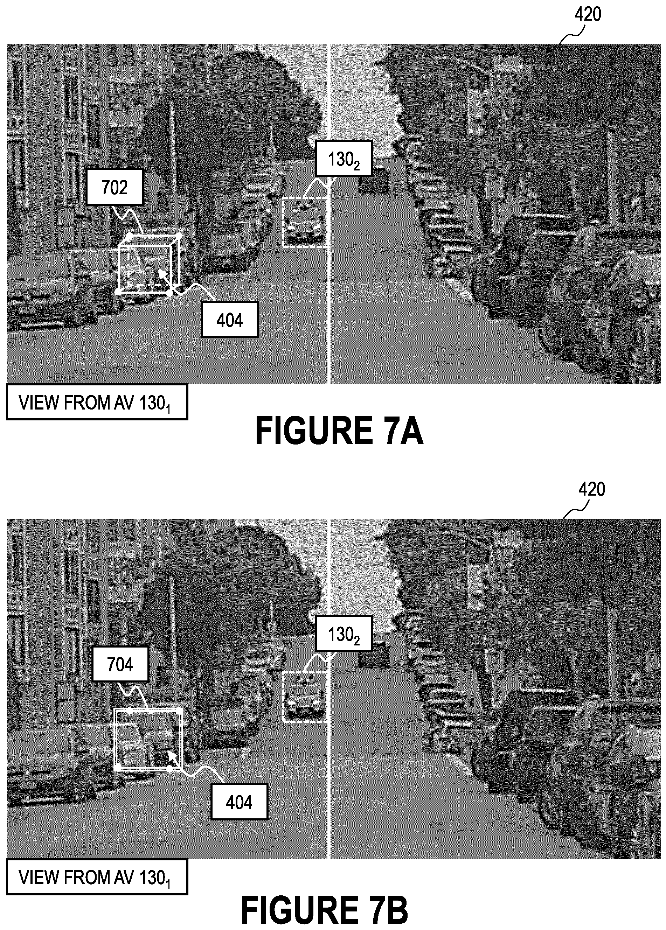

FIGURES 7A-B depict projection of a three-dimensional shape 702 corresponding to a detected object 404 onto a two-dimensional camera space (shown as camera view 420 from AV $130_1$) to determine a two-dimensional shape 704 corresponding to the detected object 404, according to some aspects of the disclosed technology. The occluded object 402 of FIGURES 6A-B can be occluded by detected object 404. Three-dimensional shape 702 (e.g., a hexahedron) corresponding to object 404 is shown in FIGURE 7A. AV $130_1$ may receive and/or determine the three-dimensional shape 702 corresponding to detected object 404. Two-dimensional shape 704 (e.g., a rectangular bounding box) in the two-dimensional camera space, or camera view 420 from AV $130_1$ is shown in FIGURE 7B. The three-dimensional shape 702 may be projected onto the two-dimensional camera space, or camera view 420 from AV $130_1$ to determine the two-dimensional shape 704 corresponding to the detected object 404.

In some cases, the two-dimensional shape 704 corresponding to the detected object 404 may be determined by performing image segmentation on the camera view 420 from AV $130_1$. Image segmentation may involve determining, for each pixel in the camera view 420 from AV $130_1$, an object to which the pixel belongs. Image segmentation may involve detection of objects and boundaries of objects. The two-dimensional shape 704 may be in the shape of a blob representing contours of the detected object 404 in the two-dimensional camera space, or camera view 420 from AV $130_1$.

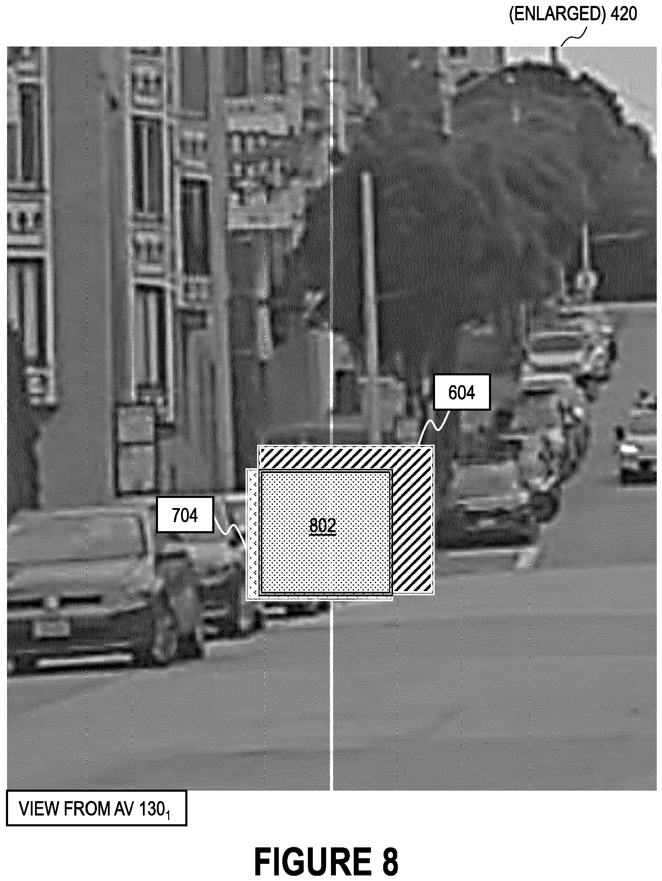

FIGURE 8 depicts two overlapping two-dimensional shapes, two-dimensional shape 604 from FIGURE 6B and two-dimensional shape 704 from FIGURE 7B corresponding to the occluded object 402 and the detected object 404 respectively, according to some aspects of the disclosed technology. An enlarged (or zoomed in) camera view 420 from AV $130_1$ is depicted.

Two-dimensional shape 704 overlapping at least partially with two-dimensional shape 604 suggests that object 402 is occluded by detected object 404. The relational occlusion information can be stored as an occlusion attribute of object 402. The occlusion attribute may store an object identifier of object 404 in a "occluded_by" attribute of object 402. There may be additional object(s) that occlude object 402, and the "occluded_by" attribute may store additional object identifier(s).

As illustrated, the two-dimensional shape 704 overlaps with two-dimensional shape 604 in area 802. Area 802 can be used to determine an occlusion attribute that describes an extent of which the object 402 is occluded, e.g., by object 404. In some cases, the area 802 may encompass additional area(s) of overlap by other objects in the scene. The extent of which the two-dimensional shape 704 is within the two-dimensional shape 604 may be used to quantify the extent to which the object 402 is occluded. The extent can be calculated in different ways. One exemplary technique to quantify the extent is to determine the Intersection over Union (IoU). Two exemplary ways to calculate the extent are as follows:

- 
$$\text{Extent} = \text{Area of } 802 \ / \ \text{Area of } 704$$

  ◦ e.g., percentage of area of two-dimensional shape 604 that is occluded by or overlaps with area of shape two-dimensional shape 704

- 
$$\text{Extent} = \text{Area of } 802 \ / \ (\text{Area}(\text{Union of } 704 \text{ and } 604))$$

  o e.g., IoU of two-dimensional shape 704 and two-dimensional shape 604

In some cases, occlusion attribute indicating an extent of occlusion may indicate location of occlusion information. Location information may be encoded as a list of one or more values such as top, bottom, left, and right of an occluded object. The location information may be encoded as a list of one or more values such as top left, top right, bottom left, bottom right. Location information may be encoded as a list of one or more values such as top, bottom, center, left, right, top left, top right, bottom left, and bottom right.

In some cases, optical-based or ray-tracing based projection to find the two-dimensional shape that corresponds to an object from a three-dimensional shape that corresponds to the object may be replaced by a computer vision system (e.g., involving a machine learning model, digital signal processing model, etc.). The three-dimensional shape and optionally sensor data or a derivation of the sensor data corresponding to the object (e.g., camera image captured by an image sensor of the AV that detected the object, an array of feature embeddings generated from the camera image) may be provided as input(s) to a computer vision system. The computer vision system can determine and output the two-dimensional shape in the two-dimensional camera space, or camera view 420 from AV $130_1$.

Generating and sharing multi-view data

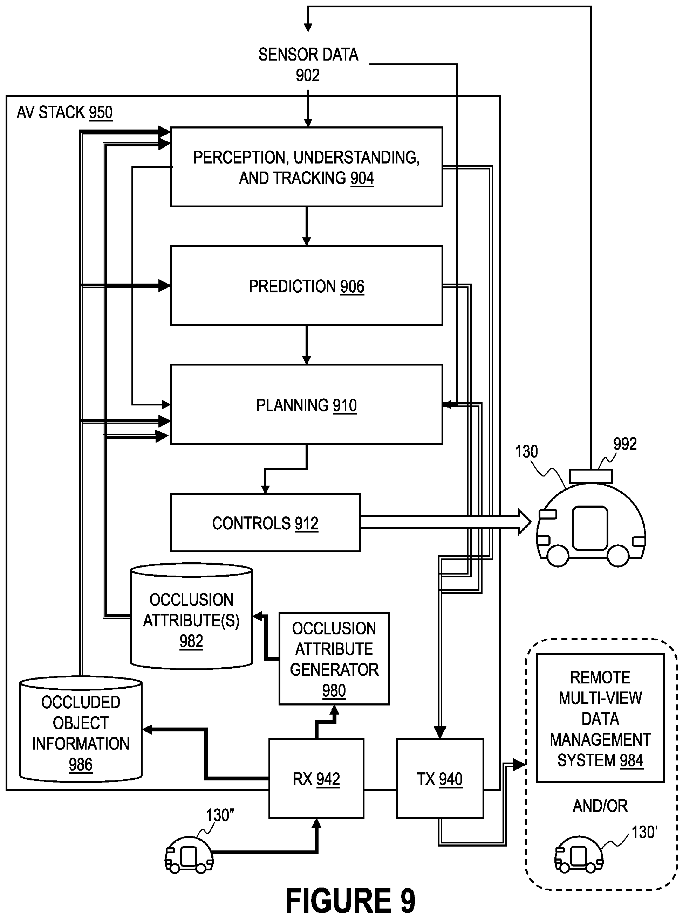

FIGURE 9 illustrates an exemplary implementation of an AV stack 950 of an AV 130 having sensor suite 992, according to some aspects of the disclosed technology. An AV 130 may be equipped with one or more sensors, referred herein as a sensor suite 992, to sense the environment surrounding AV 130 and collect information (e.g., sensor data 902) to assist AV 130 in making driving decisions. The sensor suite 992 may include, e.g., sensor systems 1404, 1406, and 1408 of FIGURE 14. The sensor suite 992 may sense an area surrounding AV 130.

The AV stack 950 may include perception, understanding, and tracking part 904, prediction part 906, planning part 910, and controls part 912. The sensor data 902 may be processed and analyzed by perception, understanding, and tracking part 904 to detect and track objects in the environment of the AV and determine an understanding of objects in the environment of the AV 130. In some cases, the perception part of perception, understanding, and tracking part 904 may perceive the area surrounding AV 130 by analyzing sensor data and detecting objects that are present in the sensor data. In some cases, understanding part of perception, understanding, and tracking part 904 may classify detected objects and/or determine attributes of detected objects. In some cases, tracking part 904 may maintain a database of tracked objects at different time instants or across frames, including the location coordinates of the tracked objects, three-dimensional shapes corresponding to the tracked objects, and feature embeddings of the tracked objects. Tracking part of perception, understanding, and tracking part 904 may maintain a map of tracked objects for a current time, current timestamp, current tick, or current frame.

Prediction part 906 may determine future motions and behaviors of the AV and/or detected and tracked objects in the environment of the AV 130. Prediction part 906 may determine and utilize motion models to track and predict kinematic and/or behaviors of detected objects.

The AV 130 may localize itself based on location information (e.g., from location sensors) and the map information. The planning part 910 may create (collision-free) planned paths or trajectories based on one or more of: information from perception, understanding, and tracking part 904, information from prediction part 906, the sensor data 902, map information, localization information, etc.

Subsequently, planned paths or trajectories can be provided to controls part 912 to generate vehicle control commands to control the AV 130 (e.g., for steering, accelerating, decelerating, braking, turning on vehicle signal lights, open doors, etc.) according to the planned path. Vehicle control commands may be sent to vehicle controls and/or mechanical systems of AV 130, e.g., vehicle propulsion system 1430, braking system 1432, steering system 1434, safety system 1436, and cabin system 1438 of FIGURE 14. Vehicle control commands may cause AV 130 to navigate on the roadways.

The operations of components of the AV stack 950 may be implemented using a combination of hardware and software components. For instance, an AV stack 950 performing the perception, understanding, prediction, planning, and control functionalities may be implemented as software code or firmware code encoded in non-transitory computer-readable medium. The code for AV stack 950 may be executed on one or more processor(s) (e.g., general processors, central processors (CPUs), graphical processors (GPUs), digital signal processors (DSPs), ASIC, etc.) and/or any other hardware processing components on the AV. Additionally, the AV stack 950 may communicate with various hardware components (e.g., on-board sensors and control system of the AV) and/or with an AV infrastructure over a network. At least a part of the AV stack 950 may be implemented on local compute system 1410 of FIGURE 14. At least a part of the AV stack 950 may be implemented on the computing system 1500 of FIGURE 15 and/or encoded in instructions of storage device 1530 of FIGURE 15.

The AV stack 950 may receive sensor data 902 from the sensor suite 992 of AV 130. Sensor data 902 may include camera sensor data (e.g., images and/or videos). Sensor data 902 may include range detection sensor data (e.g., LIDAR sensor data, RADAR sensor data, time-of-flight sensor data, etc.). Sensor data 902 may include ultrasonics sensor data. Sensor data 902 may include audio data. The sensor data 902 may include fused sensor data (e.g., data fused from multiple modalities).

Perception, understanding, and tracking part 904 may detect an object in the environment of AV 130 based on sensor data 902. One or more parts of perception, understanding, and tracking part 904 may determine object information about the detected object. Object information can include information about the object that AV 130 has determined using AV stack 950 and sensor data 902. Object information may be transmitted by transmitter 940 to another AV in the fleet of AVs, e.g., AV 130'. Object information may be transmitted by transmitter 940 to a remote multi-view data management system 984.

The object information can assist another AV, e.g., AV 130', to compute occlusion attributes for objects that may be occluded from view of AV 130' (e.g., objects outside of the perceivable area of one or more sensors of AV 130'). The information can allow a remote multi-view data management system 984, to compute occlusion attributes for objects that may be occluded from view of another AV in the same scene (e.g., objects outside of the perceivable area of the other AV). The information can assist another AV, e.g., AV 130', to better perform or improve performance of: perception of the area, understanding of the objects, tracking objects, prediction of objects, and/or path planning in the area. The object information may be determined using, e.g., digital signal processing, computer vision, machine learning models, statistical inference, etc. Object information may be derived from, or predicted from, inferences or other information determined in perception, understanding, and tracking part 904. In some cases, the object information may include rich information about the detected object, as determined by perception, understanding, and tracking part 904 and/or prediction part 906 of the AV stack 950. Object information may include intermediate outputs and/or final outputs produced by parts of the AV stack 950.

In some cases, the object information includes location coordinates of the detected object. Location coordinates may include coordinates in three-dimensional space. Perception part of perception, understanding, and tracking part 904 can determine and/or predict the location coordinates of the detected object.

The object information may include a three-dimensional shape of the detected object. Perception part of perception, understanding, and tracking part 904 can determine and/or predict the three-dimensional shape of the detected object. The three-dimensional shape may be specified based on a local reference frame of AV 130. Coordinates of the three-dimensional shape may be translated from the local reference frame of AV 130 to a common reference frame shared by a fleet of AVs. In some cases, the object information may include a bounding box representing dimensions of, size of, boundaries of, or space occupied by the detected object. In some cases, a different three-dimensional shape may be used instead of a bounding box to represent dimensions of, size of, boundaries of, or space occupied by the detected object. Perception, understanding, and tracking part 904 may determine the bounding box. The bounding box may include a box defined in three-dimensional space. The bounding box may include an x, y, z coordinates, width length, height length, and depth length. The bounding box may include four (4) x, y, z coordinates defining a face of the box, and a depth length. The bounding box may include eight (8) x, y, z coordinates defining the eight corners of the box. Coordinates used in specifying the bounding box or other suitable shape may be translated from a local reference frame of AV 130 to a common reference frame shared by the fleet of vehicles.

The object information may include a motion model representing expected kinematics of the detected object. Prediction part 906 may determine the motion model. Depending on the classification(s) and/or attribute(s) of the detected object (as determined by perception, understanding, and tracking part 904), and/or past location coordinates of the detected object (as tracked by perception, understanding, and tracking part 904), prediction part 906 may determine a motion model that corresponds to the detected object. A motion model may include a speed/velocity of the detected object or expected speed/velocity of the detected object. A motion model may include an acceleration of the detected object or expected acceleration of the detected object. A motion model may include a direction of travel of the detected object or expected direction of travel of the detected object. A motion model may include a current or past movement trajectory of the detected object or one or more expected movement trajectories of the detected object. A motion model may model kinematics (e.g., how an object is expected to move) that are associated with or correspond to a certain type of object, e.g., a four-wheeled vehicle, a linked bus, a two-wheeled vehicle, a pedestrian, flying debris, etc.

The object information may include object class information of the detected object. The object class information may be generated based on generated based on sensor data captured by the vehicle that perceived or detected the object. The perception, understanding, and tracking part 904 may have a machine learning model, such as a road object classifier, to determine the object class information. Object class information may include a coarse grained classification of the detected object (e.g., vehicle, autonomous vehicle, pedestrian, bicycle, unknown, etc.). Object class information may include a fine grained classification (e.g., type of emergency vehicle, whether the vehicle is a school bus, type of emergency personnel, etc.). The object information may include object attribute information of the detected object. The object attribute information may be generated based on sensor data captured by the vehicle that perceived or detected the object. Perception, understanding, and tracking part 904 may extract attribute(s) about the detected object (e.g., whether vehicle door is open, state of vehicle signal lights, whether the debris is drivable, whether the animal can fly, whether the emergency personnel is holding a sign, whether the emergency personnel is performing a hand signal to direct traffic, etc.). Object information may include relationship(s) the detected object may have with other objects in the area. The perception, understanding, and tracking part 904 may extract relationship(s) that the detected object may have with other objects in the area.

The object information may include one or more confidence scores associated with the object information. Some object information may be inferred or estimated, and the object information may have uncertainty. Some object information may have probabilities associated with the information (e.g., representing how likely the object information represents the truth, representing how likely the object information is correct).

To prepare the information to be shared with other AVs in a fleet of AVs, the location coordinates of the detected object may be translated from a local reference frame of AV 130 to a common reference frame shared by the fleet of vehicles. The local reference frame of the AV 130 may have the location of the AV 130 as the origin of the local reference frame. The common reference frame shared by the fleet may have an origin of the common reference frame located elsewhere (e.g., a center point of a city, a landmark of the city, a border of a subdivision, etc.). The translation may enable other AVs to make use of the location coordinates of the detected object.

The object information may include sensor data corresponding to the detected object. The object information may include an array of feature embeddings generated based on the sensor data corresponding to the detected object captured by the vehicle that perceived or detected the object. The object information may include an array of feature embeddings generated based on a simulation of the first object. It may be desirable to compress sensor data associated with the object or sensor data of environment surrounding AV 130 so that the sensor data may be shared efficiently with other AVs (e.g., AV 130'), and so that the compressed information may be ingested readily in machine learning models of the other AVs. In some cases, AV 130 may compress, using an encoder in the AV stack 950, the sensor data corresponding to the detected object (e.g., data in multiple dimensions) into an array, such as an array of feature embeddings or a vector having feature embedding values. The encoder can extract features from the sensor data corresponding to the detected object (e.g., cropped sensor data). The encoder can compress the sensor data, which may include sensor data from one or more sensor modalities, and may have multiple dimensions into lower-dimensional data, such as an array. The array can include embeddings capturing salient features of the detected object. The array can be ingested readily by machine learning models in another AV, such as AV 130'. In some cases, the encoder can compress fused camera image sensor data and point clouds from detection and range sensors corresponding to the detected object (e.g., cropped sensor data) into a reduced size array.

The encoder may already be included within AV stack 950. The encoder may be a part of the perception part of perception, understanding, and tracking part 904. The encoder may be a part of the understanding part of perception, understanding, and tracking part 904. The encoder may be included to perform compression of intermediate outputs and/or final outputs of perception, understanding, and tracking part 904. The encoder may include one or more machine learning models, such as a neural network based machine learning model, and/or a transformer based machine learning model. The encoder may receive sensor data corresponding to the detected object as input (e.g., single modality sensor data or multi-modal sensor data), process the sensor data through one or more layers of nodes, and generate the array at an output layer of nodes. Weights or matrices in the nodes used in processing the sensor data may be trained to optimize for a certain loss function.

AV 130 may transmit object information about various objects detected by AV 130 using transmitter 940. AV 130 may transfer object information about AV 130 as well. Object information about AV 130 may include location coordinates of AV 130, three-dimensional shape (e.g., bounding box) of AV 130, planned trajectory of AV 130, motion model of AV 130, object class information of AV 130, object attribute information of AV 130, an array of feature embeddings of AV 130 (which may be generated by a simulation of AV 130), etc.

Receiving and using the multi-view data to generate occlusion attributes in an AV

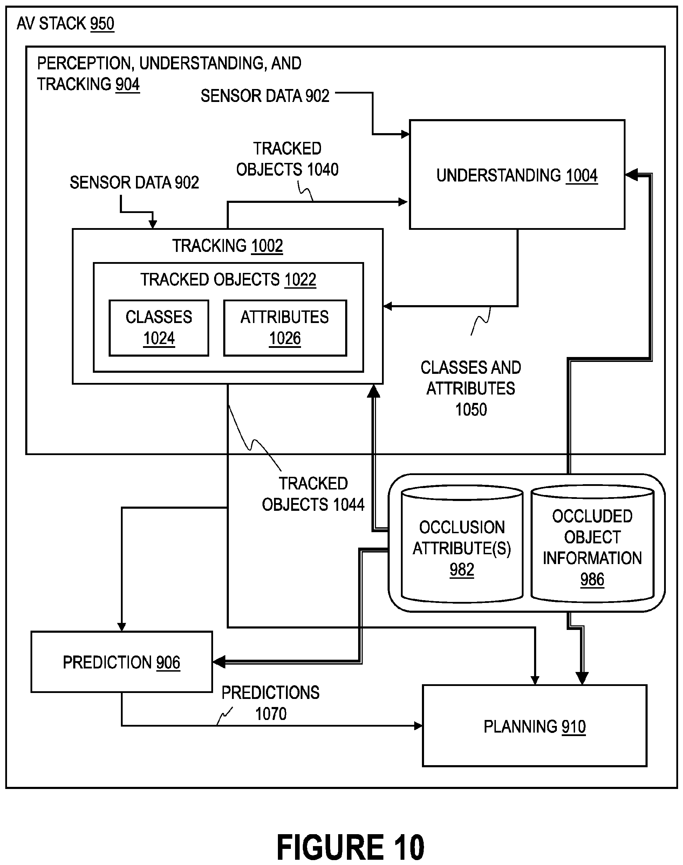

Object information generated by AV 130 of FIGURES 1-4 and 6-8 about objects detected by AV 130 and optionally object information about AV 130 can be transferred to another AV in the fleet, such as AV 130'. Referring to FIGURE 9, AV 130 may receive information from another AV in the fleet, such as AV 130", via receiver 942. AV 130 can incorporate the received object information into one or more of perception, understanding, and tracking part 904, prediction part 906, and planning part 910. AV 130 may receive object information corresponding to objects detected by AV 130". The object information for a given object may include one or more of: location coordinates, three-dimensional shape, dimensions, object class information, motion model, confidence score, and arrays of feature embeddings. The collection of object information of detected objects can be used by AV 130 to determine which objects within detection range of sensors of AV 130 are occluded by other object(s) in the scene. For occluded object, AV 130, e.g., occlusion attribute generator 980, can use the object information to generate occlusion attributes 982. Occlusion attribute generator 980 may implement processes described and illustrated with FIGURES 1-8 and 13 (e.g., including determining which objects may be within detection range but may be occluded through matching and filtering, and determining one or more occlusion attributes for the occluded objects). Received object information that corresponds to occluded objects can be stored in occluded object information 986. Occlusion attributes 982 and optionally the occluded object information 986 can be ingested or used by algorithms in one or more one or more of perception, understanding, and tracking part 904, prediction part 906, and planning part 910. Some details regarding how the occlusion attributes 982 and optionally the occluded object information 986 are described with FIGURE 10.

AV 130 may receive information about objects within a certain area near AV 130" via receiver 942. AV 130 may receive information about AV 130" as well via receiver 942. The area may be defined based on a radius (e.g., 100m, 200m, etc.) from the location of AV 130". Not all objects that AV 130" is reporting are within the observable or perceivable area of sensor suite 992 of AV 130. Not all objects are within a detection range of the sensor suite 992 of AV 130 and can be filtered out or discarded. Some objects that AV 130" is reporting may be outside the observable or perceivable area of sensor suite 992, e.g., the objects may be occluded from view of sensor suite 992. AV 130 may determine from the object information that the object is not within an observable or perceivable area of one or more sensors of sensor suite 992 of AV 130. AV 130 may check whether the object information represents an object that is already tracked by AV 130 or already seen by AV 130. If the object is not already tracked by AV 130, AV 130 may determine that the object is likely to be occluded from view, or outside the observable or perceivable area of sensor suite 992.

For objects that are likely to be occluded, the object information (e.g., object class information, object attribute information, motion model, confidence score, array of feature embeddings, three-dimensional shape, etc.) corresponding to various occluded objects can be stored as occluded object information 986. The object information (e.g., three-dimensional shape, array of feature embeddings, etc.) corresponding to various occluded objects can be used by occlusion attribute generator 980 to generate corresponding occlusion attributes 982.

In some embodiments, the received object information, e.g., location coordinates, and specification of a bounding box, may be based on a common reference frame shared by the fleet of vehicles. Processes in AV stack 950 may operate using a local reference frame of AV 130, and not the common reference frame shared by the fleet of vehicles. AV 130 may translate the received information from the common reference frame to the local reference frame used by AV 130.

FIGURE 10 illustrates an exemplary implementation of an AV stack 950, according to some aspects of the disclosed technology. As illustrated, AV stack 950 includes perception, understanding, and tracking part 904, prediction part 906, and planning part 910. The figure illustrates one exemplary configuration and arrangement of parts within AV stack 950 and is not intended to be limiting to the disclosure. Occlusion attributes 982 and optionally occluded object information 986 may be used by various components of AV stack 950 to improve the operations of the AV stack 950.

Perception, understanding, and tracking part 904 may include tracking part 1002 and understanding part 1004. Tracking part 1002 may receive sensor data 902 from a sensor suite of an AV (the sensor suite may include, e.g., sensor systems 1404, 1406, and 1408 of FIGURE 14). Tracking part 1002 may determine from the sensor data 902 presence of objects in an environment of the AV and track the objects presence over time (or across frames of data). Tracking part 1002 may maintain tracked objects 1022 (organized in a suitable data structure that tracks presence and location of unique objects over time or across frames). The presence of an object can be encoded as a three-dimensional shape (e.g., bounding box) defining boundaries and location coordinates of an object in a three-dimensional space. The presence of an object can be encoded as location coordinates and size information that specify the object's occupancy in space.

Understanding part 1004 may receive sensor data 902 and optionally tracked objects information 1040 (relating to tracked objects 1022) to understand the objects in the environment of the AV. Understanding part 1004 may process sensor data 902, e.g., using one or more machine learning models, to produce inferences about the tracked objects 1022, such as one or more classes and/or one or more attributes for tracked objects 1022. Understanding part 1004 may provide classes and attributes 1050 as feedback information to tracking part 1002. Directly or indirectly, classes and attributes 1050 produced by understanding part 1004 may be provided to prediction part 906 and/or planning part 910 to assist prediction and/or planning functionalities respectively.

As illustrated in the figure, tracking part 1002 may serve as a classes and attributes collector and can collect and maintain classes 1024 and/or attributes 1026 for tracked objects 1022. The objects and information associated with the objects may be maintained as tracked objects 1022 in tracking part 1002. Tracked objects 1022 may be in a format of a database or collection of data that includes data entries for tracked objects 1022, where each data entry for a tracked object may include information for the tracked object, such as an object identifier of the tracked object, bounding box of the tracked object, one or more classifications of the tracked object (object class information), and one or more attributes of the tracked object (object attribute information). Tracked objects 1022 may be organized in a map format, e.g., such as a grid map or raster map of an environment surrounding the AV, whose pixels may store information for various tracked objects, such as an object identifier of the tracked object, bounding box of the tracked object, one or more classifications of the tracked object, and one or more attributes of the tracked object. Occlusion attributes 982 and optionally occluded object information 986 can contribute to classes 1024 and attributes 1026 of tracked objects 1022.

Perception, understanding, and tracking part 904 may provide tracked objects information 1044 (of tracked objects 1022) to prediction part 906. Perception, understanding, and tracking part 904 may provide tracked objects information 1044 (of tracked objects 1022) to planning part 910. Prediction part 906 may provide predictions 1070 to planning part 1010. Tracked objects information 1040 and/or tracked objects information 1044 may include at least some of the information maintained in tracked objects 1022. Tracked objects information 1044 provided from tracking part 1002 to prediction part 906 and planning part 910 may include information produced by tracking part 1002 and information produced by understanding part 1004.

In some cases, occlusion attributes 982 and optionally occluded object information 986 can be provided to understanding part 1004. In some cases, occlusion attributes 982 and optionally the other object information in occluded object information 986 can be used to increase an attention of a machine learning model in perception, understanding, and tracking part 904 in a specific area (e.g., area where an object is outside the observable or perceivable or perceivable area). The amount of attention applied by the machine learning model may depend on the occlusion attribute that describes or encodes an extent of occlusion of an occluded object by another occluded object. The amount of attention applied by the machine learning model may depend on a number of objects that are occluding an object (e.g., number of object identifiers in the relational occlusion attribute). In some cases, an occlusion attribute having an extent of occlusion may augment inferences made by understanding part 1004. The extent of occlusion may adjust (e.g., decrease) a confidence score of an inference made by understanding part 1004. If an object is highly occluded (e.g., the extent of occlusion exceeds X%), an inference (e.g., object class, object attribute) could be inaccurate. In some cases, an occlusion attribute having an extent of occlusion may be used as an input to understanding part 1004. A machine learning model may have been trained to understand occluded objects with labeled data having occlusion attributes. In some cases, an extent of occlusion having location of occlusion information could inform an algorithm how to better determine object class and/or object attributes. Extent of occlusion can inform understanding part 1004 the likelihood that one or two objects may be an articulated bus as opposed to a non-articulated bus or two separate vehicles. Extent of occlusion can be used to mask out areas of an image that does not belong to an occluded object to increase accuracy of an algorithm in understanding part 1004. The received array of feature embeddings of an occluded object in occluded object information 986 may be used in understanding part 1004 to perceive and/or to understand the occluded object. The array of feature embeddings may be used by understanding part 1004 to make inferences such as classes and attributes of the occluded object. The received array of feature embeddings of an occluded object in occluded object information 986 may be decoded. The decoded array may be used as part of sensor data 902 that is processed by understanding part 1004 to track (or perceive or locate) the occluded object in future frames of sensor data.

In some cases, occlusion attributes 982 and optionally occluded object information 986 can be provided to tracking part 1002. In some cases, the occlusion attributes 982 and optionally the other object information in occluded object information 986 may be used, e.g., by perception, understanding, and tracking part 904, to track objects even if the detected object corresponding to the received information is outside the observable or perceivable area of the one or more sensors of AV 130. Three-dimensional shape corresponding to occluded object(s) in occluded object information 986 can be included in tracked objects 1022 with an occluded flag. Occlusion attributes can be stored as part of attributes 1026 in tracked objects 1022. The occlusion information may be used by other processes in AV stack 950 to understand the objects in the scene, regardless of whether the object is occluded or not.

In some cases, occlusion attributes 982 and optionally occluded object information 986 can be provided to prediction part 906. Occlusion attributes 982 may impact confidence of predictions 1070 made by prediction part 906. In some cases, predictions 1070 made for highly occluded objects may have lower confidence. In some cases, predictions 1070 made for highly occluded objects may take into account more possibilities given the uncertainty caused by the occlusion. In some cases, predictions 1070 may include more possibilities given the uncertainty caused by the occlusion. In some cases, predictions 1070 may use relational occlusion attributes to better predict movements and kinematics of objects in the scene. Knowing which object may be occluding another object may impact how certain objects may behave. For example, occluded pedestrians may behave more cautiously than pedestrians that are aware that other vehicles can see the pedestrian. In some cases, predictions 1070 may use three-dimensional shape (e.g., representing occupancy of the occluded object in space) in occluded object information 986 to better predict how the occluded object may move in the future. In some cases, predictions 1070 may use motion model in occluded object information 986 to better predict how the occluded object may move in the future. In some cases, predictions 1070 may use object class information and/or object attribute information in occluded object information 986 to better predict how the occluded object may move in the future.

In some cases, occlusion attributes 982 and optionally occluded object information 986 can be provided to planning part 910. Planning part 910 may take information about occluded objects into account when creating an occupancy map of the surroundings of the AV. Planning part 910 may include occluded objects in the occupancy map. In some cases, planning part 910 may add additional buffer to certain objects in the occupancy map to avoid getting too close to occluded objects when creating a collision-free path. The additional buffer may depend on the extent of occlusion in the occlusion attributes 982. The additional buffer may depend on object class information and/or object attribute information in occluded object information 986, if available.

The location coordinates and/or three-dimensional shapes of occluded objects in occluded object information 986 may be used by AV stack 950 may be used to increase attention or change an attention of one or more parts of the AV stack 950. In some cases, the one or more parts of the AV stack 950 may use an attention-based (e.g., transformer) model, and the attention matrices having weights assigned to different regions may be adjusted based on the location coordinates so as to increase attention in the area near the object. In some cases, the location coordinates may impact whether sensor fusion is to be performed for the area near the object to increase accuracy of prediction/inferences being made by the one or more parts of the AV stack. In some cases, the location coordinates may increase the resolution or content of the sensor data in the area near the object being used as input to the one or more or parts of the AV stack. In some cases, the location coordinates may cause one or more additional models to be applied or activated to process the sensor data in the area near the object to derive object class information and/or object attribute information that may be particularly pertinent to occluded objects (e.g., apply a model to determine whether a car door is open).

The array of feature embeddings of occluded objects stored in occluded object information 986 may be used by AV stack 950 directly in one or more processes in AV stack 950. In some cases, the array of feature embeddings may be decoded by a decoder in AV stack 950. The decoder may expand or decompress the information back into sensor data corresponding to the object. The decoded information may be used to track and/or associate the object in later frames of sensor data. In some cases, the decoder may already be a part of AV stack 950. The decoder may be a part of the perception part of perception, understanding, and tracking part 904. The decoder may be a part of the understanding part of perception, understanding, and tracking part 904. The decoder may be included to perform expansion or decompression of intermediate outputs of perception, understanding, and tracking part 904. The decoder may include one or more machine learning models, such as a neural network based machine learning model, and/or a transformer based machine learning model. The decoder may receive the array as input, process the array through one or more layers of nodes, and generate a higher dimensionality data, e.g., the sensor data corresponding to the detected object (e.g., single modality sensor data or multi-modal sensor data) at an output layer of nodes. Weights or matrices in the nodes used in processing the array may be trained to optimize for a certain loss function. The decoder may mirror the structure of an encoder on AV 130" to perform a reverse function, inverse operation, or inverting transformation.

Exemplary ways to share information among vehicles in a fleet of vehicles

FIGURE 1 1 illustrates vehicle-to-vehicle communications between different vehicles in an area, according to some aspects of the disclosed technology. AV $130_1$, AV $130_2$, AV $130_3$, and AV $130_4$ may be part of a fleet of AVs. The AVs may share information (e.g., object information) with each other and may communicate with each other via a vehicle-to-vehicle communication protocol (e.g., near field communications, radio frequency communications, etc.). In some cases, an AV may broadcast object information and an array (and the timestamp) for respective objects within a radius of the AV to any AV in the fleet that may be listening for the information. In some cases, an AV may receive a request to share information with another AV in the fleet, and in response, the AV may transfer or provide the information for respective objects within a radius of the AV. The radius may be specified by the AV that is requesting the information. The radius may depend on one or more factors (e.g., speed/velocity of the AV that is requesting the information, level of congestion in the area, etc.). In some cases, an AV may broadcast or transmit a request for object information to other vehicles in the fleet of vehicles located in the area (e.g., an area of interest as discussed with FIGURES 1-3). The area of interest may be based on a distance or radius from the AV. The distance or radius may change based on one or more factors, e.g., a speed/velocity of the AV, level of congestion in the vicinity of the AV, whether the AV is approaching an intersection, whether the AV is approaching a blind corner or blind turn, whether the AV is expecting objects to be occluded behind a hill, the type of maneuver that the AV is performing, etc.

Collecting and using multi-view data from vehicles in a fleet of vehicles

FIGURE 12 illustrates communications between different vehicles in an area via remote multi-view data management system 984, according to some aspects of the disclosed technology. AV $130_1$, AV $130_2$, and AV $130_3$ may be part of a fleet of AVs. The AVs may share information with remote multi-view data management system 984. An AV may transmit object information for respective objects within a radius of the AV to remote multi-view data management system 984 via long-range communication protocol (e.g., cellular network communications). remote multi-view data management system 984 may collect information from various AVs in the fleet of AVs. In some cases, an AV in the fleet may remote multi-view data management system 984 for object information and an array for respective objects within an area of interest for the AV. The AV may transmit a request for object information of an area of interest to the remote multi-view data management system 984. The AV may receive the object information in response to the request.

Remote multi-view data management system 984 may implement processes (e.g., occlusion attribute generator 1204) for generating occlusion attributes 1202 and collect occluded object information 1210 for occluded objects, in a similar fashion as processes in AV 130 as illustrated by the FIGURES and described herein. Remote multi-view data management system 984 may include occlusion attribute generator 1204. Occlusion attribute generator 1204 may be similar to occlusion attribute generator 980. Occlusion attribute generator 1204 may implement processes described and illustrated with FIGURES 1-8 and 13 (e.g., including determining which objects may be within detection range but may be occluded through matching and filtering, and determining one or more occlusion attributes for the occluded objects). Occlusion attributes determined by occlusion attribute generator 1204 may be stored as occlusion attributes 1202. Received object information that corresponds to occluded objects can be stored in occluded object information 986.

The object information, such as three-dimensional shapes determined by various vehicles, may be translated into and defined in a common reference frame shared by the fleet of vehicles in the remote multi-view data management system 984.

Occlusion attributes (and optionally occluded object information 1210) may be used as labeled training data for one or more machine learning models in artificial intelligence / machine learning (AI/ML) platform 1220. Occlusion attributes can be provided as part of labeled training data for a machine learning model. Occlusion attributes (and optionally occluded object information 1210) may be used to improve the labeled data (e.g., adding to the labeled data, and/or correcting incorrectly labeled data) used for training the machine learning model. The machine learning model may be a model used for understanding objects (e.g., a classifier, an attribute extraction model, etc.). The machine learning model may be a model used for predicting behaviors of objects (e.g., a model that outputs a likely trajectory of an object). Occlusion attributes may be used as an input to a machine learning model during training. The machine learning model can learn to detect occluded objects (learn to understand "objectness"), even unknown and highly occluded objects. Occlusion attributes may be used to tune a parameter in the machine learning model to adjust the final output of a prediction or inference. Occlusion attributes may be used to tune a parameter in the machine learning model to adjust a confidence and/or uncertainty of a prediction or inference. Occlusion attributes may be used by a machine learning model to produce a more accurate confidence and/or uncertainty of a prediction or inference. During training and updating of weights of a machine learning model, the occlusion attributes may be used to modify the error used in calculating a loss function, if the error was related to an object being highly occluded. The error relating to the occluded object may be weighted less (or zeroed) if the extent of occlusion was too high for the model to correctly generate an inference. The machine learning model may be penalized less if the extent of occlusion was too high for the machine learning model to correctly make an inference about the occluded object. The machine learning model may avoid a penalty if the extent of occlusion was too high for the machine learning model to correctly make an inference about the occluded object.

In some cases, the occlusion attributes (and optionally occluded object information 1210) may be used in the testing or evaluation of a machine learning model on AI/ML platform 1220. The machine learning model may be trained to detect objects using sensor data captured by an AV. From the perspective of the AV, there may be one or more occluded objects in the scene. The performance of the machine learning model may depend on precision-recall scores. The occlusion attributes may augment the performance testing or evaluation by adjusting the ground truth used for determining the precision-recall scores. The machine learning model may not be penalized for failing to detect (or recall) a highly occluded object.

Exemplary method for generating occlusion attributes

FIGURE 13 shows a flow diagram illustrating a method for generating one or more occlusion attributes based on object information detected by a first vehicle and a second vehicle in a scene, the first vehicle and the second vehicle being part of a fleet of vehicles, according to some aspects of the disclosed technology. The method may be implemented on AV 130 (e.g., in compute system 1410 of AV 130, in or with AV stack 950, etc.) as illustrated in the FIGURES. The method may be implemented on remote multi-view data management system 984 as illustrated in the FIGURES.

In 1302, a first three-dimensional shape representing a first object in the scene may be received. The first three-dimensional shape can be determined by the first vehicle. The first object may be within a first field of perceivable area of one or more sensors of the first vehicle.

In 1304, the first object may be determined to be at least partially occluded by a second object. The second object may be within a second field of the perceivable area of one or more sensors of the second vehicle. The first object may be outside the second field of the perceivable area of one or more sensors of the second vehicle.

In 1306, the first three-dimensional shape may be projected onto a two-dimensional camera space of the second vehicle to determine a first two-dimensional shape representing the first object.

In 1308, a second two-dimensional shape in the two-dimensional camera space representing the second object in the scene may be determined.

In 1310, a first occlusion attribute indicating that the first object is occluded by at least the second object may be determined and stored. A second occlusion attribute indicating an extent of which the second two-dimensional shape is within the area of the first two-dimensional shape may be determined and stored.

Exemplary AV management system

FIGURE 14 illustrates an exemplary system environment that may be used to facilitate fleet AV operations, according to some aspects of the disclosed technology.

Turning now to FIGURE 14, this figure illustrates an example of an AV fleet management system 1400, in which some of the aspects of the present disclosure can be implemented. One of ordinary skill in the art will understand that, for the AV fleet management system 1400 and any system discussed in the present disclosure, there may be additional or fewer components in similar or alternative configurations. The illustrations and examples provided in the present disclosure are for conciseness and clarity. Other embodiments may include different numbers and/or types of elements, but one of ordinary skill the art will appreciate that such variations do not depart from the scope of the present disclosure.

In this example, the AV fleet management system 1400 includes an AV 130, a data center 1450, and a client computing device 1470. The AV 130, the data center 1450, and the client computing device 1470 may communicate with one another over one or more networks (not shown), such as a public network (e.g., the Internet, an Infrastructure as a Service (IaaS) network, a Platform as a Service (PaaS) network, a Software as a Service (SaaS) network, another Cloud Service Provider (CSP) network, etc.), a private network (e.g., a Local Area Network (LAN), a private cloud, a Virtual Private Network (VPN), etc.), and/or a hybrid network (e.g., a multi-cloud or hybrid cloud network, etc.).

AV 130 may navigate about roadways without a human driver based on sensor signals generated by multiple sensor systems 1404, 1406, and 1408. The sensor systems 1404-1408 may include different types of sensors and may be arranged about the AV 130. For instance, the sensor systems 1404-1408 may comprise Inertial Measurement Units (IMUs), cameras (e.g., still image cameras, video cameras, thermal cameras, signal cameras, etc.), light sensors (e.g., LIDAR systems, ambient light sensors, infrared sensors, etc.), RADAR systems, a Global Navigation Satellite System (GNSS) receiver, (e.g., Global Positioning System (GPS) receivers), audio sensors (e.g., microphones, Sound Navigation and Ranging (SONAR) systems, ultrasonic sensors, etc.), time-of-flight sensors, structured light sensor, infrared sensors, signal light sensors, thermal imaging sensors, engine sensors, speedometers, tachometers, odometers, altimeters, tilt sensors, impact sensors, airbag sensors, seat occupancy sensors, open/closed door sensors, tire pressure sensors, rain sensors, and so forth. For example, the sensor system 1404 may be a camera system, the sensor system 1406 may be a LIDAR system, and the sensor system 1408 may be a RADAR system. Other embodiments may include any other number and type of sensors.

AV 130 may also include several mechanical systems that may be used to maneuver or operate AV 130. For instance, mechanical systems may include vehicle propulsion system 1430, braking system 1432, steering system 1434, safety system 1436, and cabin system 1438, among other systems. Vehicle propulsion system 1430 may include an electric motor, an internal combustion engine, or both. The braking system 1432 may include an engine brake, a wheel braking system (e.g., a disc braking system that utilizes brake pads), hydraulics, actuators, and/or any other suitable componentry configured to assist in decelerating AV 130. The steering system 1434 may include suitable componentry configured to control the direction of movement of the AV 130 during navigation. Safety system 1436 may include lights and signal indicators, a parking brake, airbags, and so forth. The cabin system 1438 may include cabin temperature control systems, in-cabin entertainment systems, and so forth. In some embodiments, the AV 130 may not include human driver actuators (e.g., steering wheel, handbrake, foot brake pedal, foot accelerator pedal, turn signal lever, window wipers, etc.) for controlling the AV 130. Instead, the cabin system 1438 may include one or more client interfaces (e.g., GUIs, Voice User Interfaces (VUIs), etc.) for controlling certain aspects of the mechanical systems 1430-1438.

AV 130 may additionally include a local compute system 1410 that is in communication with the sensor systems 1404-1408, the mechanical systems 1430-1438, the data center 1450, and the client computing device 1470, among other systems. The local compute system 1410 may include one or more processors and memory, including instructions that may be executed by the one or more processors. The instructions may make up one or more software stacks or components responsible for controlling the AV 130; communicating with the data center 1450, the client computing device 1470, and other systems; receiving inputs from riders, passengers, and other entities within the AV's environment; logging metrics collected by the sensor systems 1404-1408; and so forth. In this example, the local compute system 1410 includes AV stack 950. AV stack 950 may include a perception, understanding, and tracking part 904, a mapping and localization stack 1414, a prediction part 906, a planning part 910, and controls part 912, a communications stack 1420, an HD geospatial database 1422, and an AV operational database 1424, among other stacks and systems. AV stack 950 may include one or more of: occlusion attribute generator 980, occlusion attributes 982, receiver 942, and transmitter 940.

Perception, understanding, and tracking part 904 may enable the AV 130 to "see" (e.g., via cameras, LIDAR sensors, infrared sensors, etc.), "hear" (e.g., via microphones, ultrasonic sensors, RADAR, etc.), and "feel" (e.g., pressure sensors, force sensors, impact sensors, etc.) its environment using information from the sensor systems 1404-1408, the mapping and localization stack 1414, the HD geospatial database 1422, other components of the AV, and other data sources (e.g., the data center 1450, the client computing device 1470, third-party data sources, etc.). The perception, understanding, and tracking part 904 may detect and classify objects and determine their current and predicted locations, speeds, directions, and the like. In addition, the perception, understanding, and tracking part 904 may determine the free space around the AV 130 (e.g., to maintain a safe distance from other objects, change lanes, park the AV, etc.). The perception, understanding, and tracking part 904 may also identify environmental uncertainties, such as where to look for moving objects, flag areas that may be obscured or blocked from view, and so forth. Exemplary implementations of perception, understanding, and tracking part 904 are illustrated in the FIGURES.

Prediction part 906 may predict behaviors and movements of tracked objects sensed by perception, understanding, and tracking part 904.

Mapping and localization stack 1414 may determine the AV's position and orientation (pose) using different methods from multiple systems (e.g., GPS, IMUs, cameras, LIDAR, RADAR, ultrasonic sensors, the HD geospatial database 1422, etc.). For example, in some embodiments, the AV 130 may compare sensor data captured in real-time by the sensor systems 1404-1408 to data in the HD geospatial database 1422 to determine its precise (e.g., accurate to the order of a few centimeters or less) position and orientation. The AV 130 may focus its search based on sensor data from one or more first sensor systems (e.g., GPS) by matching sensor data from one or more second sensor systems (e.g., LIDAR). If the mapping and localization information from one system is unavailable, the AV 130 may use mapping and localization information from a redundant system and/or from remote data sources.

Planning part 910 may determine how to maneuver or operate the AV 130 safely and efficiently in its environment. For instance, the planning part 910 may produce a plan for the AV 130, which can include a (reference) trajectory. Planning part 910 may receive information generated by perception, understanding, and tracking part 904. For example, the planning part 910 may receive the location, speed, and direction of the AV 130, geospatial data, data regarding objects sharing the road with the AV 130 (e.g., pedestrians, bicycles, vehicles, ambulances, buses, cable cars, trains, traffic lights, lanes, road markings, etc.) or certain events occurring during a trip (e.g., an emergency vehicle (EMV) blaring a siren, intersections, occluded areas, street closures for construction or street repairs, DPVs, etc.), user input, and other relevant data for directing the AV 130 from one point to another. The planning part 910 may determine multiple sets of one or more mechanical operations that the AV 130 may perform (e.g., go straight at a specified speed or rate of acceleration, including maintaining the same speed or decelerating; turn on the left blinker, decelerate if the AV is above a threshold range for turning, and turn left; turn on the right blinker, accelerate if the AV is stopped or below the threshold range for turning, and turn right; decelerate until completely stopped and reverse; etc.), and select the best one to meet changing road conditions and events. If something unexpected happens, the planning part 910 may select from multiple backup plans to carry out. For example, while preparing to change lanes to turn right at an intersection, another vehicle may aggressively cut into the destination lane, making the lane change unsafe. The planning part 910 could have already determined an alternative plan for such an event, and upon its occurrence, help to direct the AV 130 to go around the block instead of blocking a current lane while waiting for an opening to change lanes.

Controls part 912 may manage the operation of the vehicle propulsion system 1430, the braking system 1432, the steering system 1434, the safety system 1436, and the cabin system 1438. Controls part 912 may receive a plan from the planning part 910. Controls part 912 may receive sensor signals from the sensor systems 1404-1408 as well as communicate with other stacks or components of the local compute system 1410 or a remote system (e.g., the data center 1450) to effectuate the operation of the AV 130. For example, controls part 912 may implement the final path or actions from the multiple paths or actions provided by the planning part 910. The implementation may involve turning the plan from the planning part 910 into commands for vehicle hardware controls such as the actuators that control the AV's steering, throttle, brake, and drive unit.

The communication stack 1420 may transmit and receive signals between the various stacks and other components of the AV 130 and between the AV 130, the data center 1450, the client computing device 1470, and other remote systems. The communication stack 1420 may enable the local compute system 1410 to exchange information remotely over a network. Communication stack 1420 may also facilitate local exchange of information, such as through a wired connection or a local wireless connection.

The HD geospatial database 1422 may store HD maps and related data of the streets upon which the AV 130 travels. In some embodiments, the HD maps and related data may comprise multiple layers, such as an areas layer, a lanes and boundaries layer, an intersections layer, a traffic controls layer, and so forth. The areas layer may include geospatial information indicating geographic areas that are drivable or not drivable, drivable areas that constitute links or connections, and so on. The lanes and boundaries layer may include geospatial information of road lanes and related attributes. The lanes and boundaries layer may also include 3D attributes related to lanes. The intersections layer may include geospatial information of intersections and related attributes. The traffic controls layer may include geospatial information of traffic signal lights, traffic signs, and other road objects and related attributes.

The AV operational database 1424 may store raw AV data generated by the sensor systems 1404-1408 and other components of the AV 130 and/or data received by the AV 130 from remote systems (e.g., the data center 1450, the client computing device 1470, etc.). In some embodiments, the raw AV data may include HD LIDAR point cloud data, image or video data, RADAR data, GPS data, and other sensor data that the data center 1450 may use for creating or updating AV geospatial data.

Data center 1450 may be a private cloud (e.g., an enterprise network, a co-location provider network, etc.), a public cloud (e.g., an IaaS network, a PaaS network, a SaaS network, or other CSP network), a hybrid cloud, a multi-cloud, and so forth. Data center 1450 may include one or more computing devices remote to the local compute system 1410 for managing a fleet of AVs and AV-related services. For example, in addition to managing the AV 130, the data center 1450 may also support a ridesharing service, a delivery service, a remote/roadside assistance service, street services (e.g., street mapping, street patrol, street cleaning, street metering, parking reservation, etc.), and the like.

The data center 1450 may send and receive various signals to and from the AV 130 and the client computing device 1470. These signals may include sensor data captured by the sensor systems 1404-1408, roadside assistance requests, software updates, ridesharing pick-up and drop-off instructions, and so forth. In this example, the data center 1450 includes one or more of a data management platform 1452, an AI/ML platform 1220, a remote assistance platform 1458, a ridesharing platform 1460, a map management platform 1462, a remote multi-view data management system 984, among other systems. Data center 1450 may implement services and/or systems to facilitate operations of a fleet of AVs, including AV 130.

Data management platform 1452 may be a "big data" system capable of receiving and transmitting data at high speeds (e.g., near real-time or real-time), processing a large variety of data, and storing large volumes of data (e.g., terabytes, petabytes, or more of data). The varieties of data may include data having different structures (e.g., structured, semi-structured, unstructured, etc.), data of different types (e.g., sensor data, mechanical system data, ridesharing service data, map data, audio data, video data, etc.), data associated with different types of data stores (e.g., relational databases, key-value stores, document databases, graph databases, column-family databases, data analytic stores, search engine databases, time series databases, object stores, file systems, etc.), data originating from different sources (e.g., AVs, enterprise systems, social networks, etc.), data having different rates of change (e.g., batch, streaming, etc.), or data having other heterogeneous characteristics. The various platforms and systems of data center 1450 may access data stored by the data management platform 1452 to provide their respective services.

The AI/ML platform 1220 may provide the infrastructure for training, testing, and/or evaluating machine learning algorithms for operating the AV 130, the remote assistance platform 1458, the ridesharing platform 1460, the map management platform 1462, and other platforms and systems. Using the AI/ML platform 1220, data scientists may prepare data sets from the data management platform 1452 and data stored in remote multi-view data management system 984; select, design, and train machine learning models; evaluate, refine, and deploy the models; maintain, monitor, and retrain the models; and so on.

The remote assistance platform 1458 may generate and transmit instructions regarding the operation of the AV 130. For example, in response to an output of the AI/ML platform 1220 or other system of the data center 1450, the remote assistance platform 1458 may prepare instructions for one or more stacks or other components of the AV 130.

The ridesharing platform 1460 may interact with a customer of a ridesharing service via a ridesharing application 1472 executing on the client computing device 1470. The client computing device 1470 may be any type of computing system, including a server, desktop computer, laptop, tablet, smartphone, smart wearable device (e.g., smart watch; smart eyeglasses or other Head-Mounted Display (HMD); smart ear pods or other smart in-ear, on-ear, or over-ear device; etc.), gaming system, or other general-purpose computing device for accessing the ridesharing application 1472. The client computing device 1470 may be a customer's mobile computing device or a computing device integrated with the AV 130 (e.g., the local compute system 1410). The ridesharing platform 1460 may receive requests to be picked up or dropped off from the ridesharing application 1472 and dispatch the AV 130 for the trip.

Map management platform 1462 may provide a set of tools for the manipulation and management of geographic and spatial (geospatial) and related attribute data. The data management platform 1452 may receive LIDAR point cloud data, image data (e.g., still image, video, etc.), RADAR data, GPS data, and other sensor data (e.g., raw data) from one or more AVs 1402, Unmanned Aerial Vehicles (UAVs), satellites, third-party mapping services, and other sources of geospatially referenced data.

In some embodiments, the map viewing services of map management platform 1462 may be modularized and deployed as part of one or more of the platforms and systems of the data center 1450. For example, the AI/ML platform 1220 may incorporate the map viewing services for visualizing the effectiveness of various object detection or object classification models, the remote assistance platform 1458 may incorporate the map viewing services for replaying traffic incidents to facilitate and coordinate aid, the ridesharing platform 1460 may incorporate the map viewing services into the client application 1472 to enable passengers to view the AV 130 in transit enroute to a pick-up or drop-off location, and so on.

Exemplary processor-based system

FIGURE 15 illustrates an exemplary computing system with which some aspects of the subject technology may be implemented. For example, processor-based system 1500 may be any computing device making up, or any component thereof in which the components of the system are in communication with each other using connection 1505. Connection 1505 may be a physical connection via a bus, or a direct connection into processor 1510, such as in a chipset architecture. Connection 1505 may also be a virtual connection, networked connection, or logical connection.

In some embodiments, computing system 1500 represents the local compute system 1410 of FIGURE 14. In some embodiments, one or more of the described system components represents many such components each performing some or all of the function for which the component is described. In some embodiments, the components may be physical or virtual devices.

Exemplary system 1500 includes at least one processor 1510 and connection 1505 that couples various system components including system memory 1515, such as Read-Only Memory (ROM) 1520 and Random-Access Memory (RAM) 1525 to processor 1510. at least one processor 1510 may include one or more of: Central Processing Unit (CPU), Graphical Processing Unit (GPU), machine learning processor, neural network processor, or some other suitable computing processor. Computing system 1500 may include a cache of high-speed memory 1512 connected directly with, in close proximity to, or integrated as part of processor 1510.

Processor 1510 may include any general-purpose processor and a hardware service or software service. Processor 1510 may essentially be a completely self-contained computing system, containing multiple cores or processors, a bus, memory controller, cache, etc. A multicore processor may be symmetric or asymmetric.

Storage device 1530 may be a non-volatile and/or non-transitory and/or computer-readable memory device and may be a hard disk or other types of computer-readable media which may store data that is accessible by a computer.

Storage device 1530 may include software services, servers, services, etc., that when the code that defines such software is executed by the processor 1510, it causes the system 1500 to perform a function. Storage device 1530 may include instructions that implement functionalities of perception, understanding, and tracking part 904, prediction part 906, planning part 910, controls part 912, remote multi-view data management system 984, and occlusion attribute generator 980 as illustrated in the FIGURES. In some embodiments, a hardware service that performs a particular function may include the software component stored in a computer-readable medium in connection with the necessary hardware components, such as processor 1510, connection 1505, output device 1535, etc., to carry out the function.

To enable user interaction, computing system 1500 includes an input device 1545, which may represent any number of input mechanisms, such as a microphone for speech, a touchsensitive screen for gesture or graphical input, keyboard, mouse, motion input, speech, etc. Computing system 1500 may also include output device 1535, which may be one or more of a number of output mechanisms known to those of skill in the art. In some instances, multi-modal systems may enable a user to provide multiple types of input/output to communicate with computing system 1500. Computing system 1500 may include communications interface 1540, which may generally govern and manage the user input and system output. The communication interface may perform or facilitate receipt and/or transmission of wired or wireless communications via wired and/or wireless transceivers.

Embodiments within the scope of the present disclosure may also include tangible and/or non-transitory computer-readable storage media or devices for carrying or having computer-executable instructions or data structures stored thereon. Such tangible computer-readable storage devices may be any available device that may be accessed by a general-purpose or special-purpose computer, including the functional design of any special-purpose processor as described above. By way of example, and not limitation, such tangible computer-readable devices may include RAM, ROM, EEPROM, CD-ROM or other optical disk storage, magnetic disk storage or other magnetic storage devices, or any other device which may be used to carry or store desired program code in the form of computer-executable instructions, data structures, or processor chip design. When information or instructions are provided via a network or another communications connection (either hardwired, wireless, or combination thereof) to a computer, the computer properly views the connection as a computer-readable medium. Thus, any such connection is properly termed a computer-readable medium. Combinations of the above should also be included within the scope of the computer-readable storage devices.

Computer-executable instructions include, for example, instructions and data which cause a general-purpose computer, special-purpose computer, or special-purpose processing device to perform a certain function or group of functions. Computer-executable instructions also include program modules that are executed by computers in stand-alone or network environments. Generally, program modules include routines, programs, components, data structures, objects, and the functions inherent in the design of special-purpose processors, etc. that perform tasks or implement abstract data types. Computer-executable instructions, associated data structures, and program modules represent examples of the program code means for executing steps of the methods disclosed herein. The particular sequence of such executable instructions or associated data structures represents examples of corresponding acts for implementing the functions described in such steps.

**Claims**

1. A method for generating one or more occlusion attributes based on object information detected by a first vehicle and a second vehicle in a scene, the method comprising:

   receiving (S1302) a first three-dimensional shape representing a first object in the scene, wherein the first three-dimensional shape is determined by the first vehicle, and the first object is within a first field of perceivable area (802) of one or more sensors of the first vehicle;
   determining (S1304) that the first object is at least partially occluded by a second object by projecting the first three-dimensional shape and a three-dimensional shape (502, 602, 702) representing the second object onto a two-dimensional camera space (504) of the second vehicle to obtain respective two-dimensional shapes, and applying an intersection over union metric or area-based overlap calculation to the two-dimensional shapes;
   projecting (S1306) the first three-dimensional shape onto a two-dimensional camera space (504) of the second vehicle to determine a first two-dimensional shape representing the first object;
   determining (S1308) a second two-dimensional shape in the two-dimensional camera space (504) representing the second object in the scene,

   wherein the determining the second two-dimensional shape comprises:

   determining the second two-dimensional shape that corresponds to the second object by performing image segmentation on a camera image captured by the second vehicle;
   determining and storing (S1310) a first occlusion attribute indicating that the first object is occluded by at least the second object; and
determining and storing a second occlusion attribute indicating an extent of which the second two-dimensional shape is within an area (802) of the first two-dimensional shape.

2. The method of claim 1, wherein the first three-dimensional shape is a hexahedron.

3. The method of claim 1 or 2, wherein the first three-dimensional shape comprises coordinate information in a common reference frame.

4. The method of any one of claims 1-3, wherein determining the second two-dimensional shape comprises:

    receiving a second three-dimensional shape representing the second object in the scene, wherein the second three-dimensional shape is determined by the second vehicle; and
    projecting the second three-dimensional shape onto the two-dimensional camera space (504) to determine the second two-dimensional shape representing the second object.

5. The method of any one of claims 1 to 4, further comprising:

    receiving one or more further three-dimensional shapes (502, 602, 702) representing one or more further objects in the scene, wherein the one or more further three-dimensional shapes (502, 602, 702) are determined by the first vehicle; and
    determining, based on comparing the one or more further three-dimensional shapes (502, 602, 702) with three-dimensional shapes (502, 602, 702) tracked by the second vehicle, that at least one of the one or more further objects are detected by the second vehicle.

6. The method of any one of claims 1 to 5, further comprising:

    receiving one or more further three-dimensional shapes (502, 602, 702) representing one or more further objects in the scene, wherein the one or more further three-dimensional shapes (502, 602, 702) are determined by the first vehicle; and
    determining, based on comparing the one or more further three-dimensional shapes (502, 602, 702) with three-dimensional shapes (502, 602, 702) tracked by the second vehicle, that at least one of the one or more further objects are outside a detection range of the second vehicle.

7. The method of any one of claims 1 to 6, wherein determining that the first object is at least partially occluded by the second object comprises:
    determining, based on comparing the first three-dimensional shape with three-dimensional shapes (502, 602, 702) tracked by the second vehicle, that the first object is not yet detected by the second vehicle.

8. The method of any one of claims 1 to 7, wherein projecting the first three-dimensional shape onto the two-dimensional camera space (504) comprises:
    translating the first three-dimensional shape defined in a common reference frame to a local reference frame used by the second vehicle.

9. The method of any one of claims 1 to 8, wherein projecting the first three-dimensional shape onto the two-dimensional camera space (504) comprises:
    ray-tracing outer points of the first three-dimensional shape onto coordinates in the two-dimensional camera space (504) of the second vehicle, wherein the coordinates define boundary points of the first two-dimensional shape.

10. The method of any one of claims 1 to 9, wherein projecting the first three-dimensional shape onto the two-dimensional camera space (504) comprises:

    providing the first three-dimensional shape and a camera image captured by an image sensor of the second vehicle as inputs to a computer vision system; and
    determining, by the computer vision system, the first two-dimensional shape.

11. The method of any one of claims 1 to 10, further comprising:
    receiving an array of feature embeddings generated based on sensor data captured by the first vehicle of the first object.

12. The method of any one of claims 1 to 11, further comprising:
receiving object classification information corresponding to the first object, wherein the object class information is generated based on sensor data captured by the first vehicle of the first object.

13. The method of any one of claims 1 to 12, further comprising:
receiving object attribute information corresponding to the first object, wherein the object attribute information is generated based on sensor data captured by the first vehicle of the first object.

14. A vehicle, the vehicle comprising:

one or more sensors sensing an area (802) having a field of perceivable area (802), including a camera having a two-dimensional camera space (504);
vehicle controls to cause the vehicle to drive in the area (802);
a compute system (1410) to perform any one of the methods in any one of claims 1 to 13.

**Patentansprüche**

1. Verfahren zum Erzeugen eines oder mehrerer Verdeckungsattribute basierend auf einer Objektinformation, die durch ein erstes Fahrzeug und ein zweites Fahrzeug in einer Szene detektiert wird, wobei das Verfahren umfasst, dass:

eine erste dreidimensionale Form, die ein erstes Objekt in der Szene darstellt, empfangen wird (S1302), wobei die erste dreidimensionale Form durch das erste Fahrzeug ermittelt wird, und sich das erste Objekt innerhalb eines ersten Felds eines wahrnehmbaren Bereichs (802) eines oder mehrerer Sensoren des ersten Fahrzeugs befindet;
ermittelt wird (S1304), dass das erste Objekt zumindest teilweise durch ein zweites Objekt verdeckt ist, indem die erste dreidimensionale Form und eine dreidimensionale Form (502, 602, 702), die das zweite Objekt darstellt, auf einen zweidimensionalen Kameraraum (504) des zweiten Fahrzeugs projiziert werden, um jeweilige zweidimensionale Formen zu erhalten, und eine Intersection-over-Union-Metrik oder eine bereichsbasierte Überlappungsberechnung auf die zweidimensionalen Formen angewendet wird;
die erste dreidimensionale Form auf einen zweidimensionalen Kameraraum (504) des zweiten Fahrzeugs projiziert wird (S1306), um eine erste zweidimensionale Form, die das erste Objekt darstellt, zu ermitteln;
eine zweite zweidimensionale Form in dem zweidimensionalen Kameraraum (504), die das zweite Objekt in der Szene darstellt, ermittelt wird (S1308),
wobei das Ermitteln der zweiten zweidimensionalen Form umfasst, dass:

die zweite zweidimensionale Form, die dem zweiten Objekt entspricht, ermittelt wird, indem eine Bildsegmentierung an einem Kamerabild, das durch das zweite Fahrzeug erfasst wird, durchgeführt wird;
ein erstes Verdeckungsattribut, das angibt, dass das erste Objekt durch zumindest das zweite Objekt verdeckt ist, ermittelt und gespeichert wird (S1310); und
ein zweites Verdeckungsattribut, das ein Ausmaß angibt, in dem sich die zweite zweidimensionale Form innerhalb eines Bereichs (802) der ersten zweidimensionalen Form befindet, ermittelt und gespeichert wird.

2. Verfahren nach Anspruch 1, wobei die erste dreidimensionale Form ein Hexaeder ist.

3. Verfahren nach Anspruch 1 oder 2, wobei die erste dreidimensionale Form eine Koordinateninformation in einem gemeinsamen Referenzrahmen umfasst.

4. Verfahren nach einem der Ansprüche 1 bis 3, wobei das Ermitteln der zweiten zweidimensionalen Form umfasst, dass:

eine zweite dreidimensionale Form, die das zweite Objekt in der Szene darstellt, empfangen wird, wobei die zweite dreidimensionale Form durch das zweite Fahrzeug ermittelt wird; und
die zweite dreidimensionale Form auf den zweidimensionalen Kameraraum (504) projiziert wird, um die zweite zweidimensionale Form, die das zweite Objekt darstellt, zu ermitteln.

**5.** Verfahren nach einem der Ansprüche 1 bis 4, ferner umfassend, dass:

eine oder mehrere weitere dreidimensionale Formen (502, 602, 702), die ein oder mehrere weitere Objekte in der Szene darstellen, empfangen werden, wobei die eine oder die mehreren weiteren dreidimensionalen Formen (502, 602, 702) durch das erste Fahrzeug ermittelt werden; und

basierend auf einem Vergleich der einen oder mehreren weiteren dreidimensionalen Formen (502, 602, 702) mit dreidimensionalen Formen (502, 602, 702), die durch das zweite Fahrzeug verfolgt werden, ermittelt wird, dass zumindest eines des einen oder der mehreren weiteren Objekte durch das zweite Fahrzeug detektiert wird.

**6.** Verfahren nach einem der Ansprüche 1 bis 5, ferner umfassend, dass:

eine oder mehrere weitere dreidimensionale Formen (502, 602, 702), die ein oder mehrere weitere Objekte in der Szene darstellen, empfangen wird oder werden, wobei die eine oder mehreren weiteren dreidimensionalen Formen (502, 602, 702) durch das erste Fahrzeug ermittelt wird oder werden; und

basierend auf einem Vergleich der einen oder mehreren weiteren dreidimensionalen Formen (502, 602, 702) mit dreidimensionalen Formen (502, 602, 702), die durch das zweite Fahrzeug verfolgt werden, ermittelt wird, dass zumindest eines des einen oder der mehreren weiteren Objekte außerhalb eines Detektionsbereichs des zweiten Fahrzeugs liegt.

**7.** Verfahren nach einem der Ansprüche 1 bis 6, wobei das Ermitteln, dass das erste Objekt zumindest teilweise durch das zweite Objekt verdeckt ist, umfasst, dass:
basierend auf einem Vergleich der ersten dreidimensionalen Form mit dreidimensionalen Formen (502, 602, 702), die durch das zweite Fahrzeug verfolgt werden, ermittelt wird, dass das erste Objekt noch nicht durch das zweite Fahrzeug detektiert wird.

**8.** Verfahren nach einem der Ansprüche 1 bis 7, wobei das Projizieren der ersten dreidimensionalen Form auf den zweidimensionalen Kameraraum (504) umfasst, dass:
die erste dreidimensionale Form, die in einem gemeinsamen Referenzrahmen definiert ist, in einen lokalen Referenzrahmen, der durch das zweite Fahrzeug verwendet wird, übersetzt wird.

**9.** Verfahren nach einem der Ansprüche 1 bis 8, wobei das Projizieren der ersten dreidimensionalen Form auf den zweidimensionalen Kameraraum (504) umfasst, dass:
äußere Punkte der ersten dreidimensionalen Form auf Koordinaten in dem zweidimensionalen Kameraraum (504) des zweiten Fahrzeugs strahlverfolgt werden, wobei die Koordinaten Grenzpunkte der ersten zweidimensionalen Form definieren.

**10.** Verfahren nach einem der Ansprüche 1 bis 9, wobei das Projizieren der ersten dreidimensionalen Form auf den zweidimensionalen Kameraraum (504) umfasst, dass:

die erste dreidimensionale Form und ein Kamerabild, das durch einen Bildsensor des zweiten Fahrzeugs erfasst wird, als Eingaben in ein Computersichtsystem bereitgestellt werden; und

die erste zweidimensionale Form durch das Computersichtsystem ermittelt wird.

**11.** Verfahren nach einem der Ansprüche 1 bis 10, ferner umfassend, dass:
eine Anordnung von Merkmalseinbettungen empfangen wird, die basierend auf Sensordaten erzeugt werden, die durch das erste Fahrzeug des ersten Objekts erfasst werden.

**12.** Verfahren nach einem der Ansprüche 1 bis 11, ferner umfassend, dass:
eine Objektklassifizierungsinformation empfangen wird, die dem ersten Objekt entspricht, wobei die Objektklasseninformation basierend auf Sensordaten erzeugt wird, die durch das erste Fahrzeug des ersten Objekts erfasst werden.

**13.** Verfahren nach einem der Ansprüche 1 bis 12, ferner umfassend, dass:
eine Objektattributinformation empfangen wird, die dem ersten Objekt entspricht, wobei die Objektattributinformation basierend auf Sensordaten erzeugt wird, die durch das erste Fahrzeug des ersten Objekts erfasst werden.

**14.** Fahrzeug, wobei das Fahrzeug umfasst:

einen oder mehrere Sensoren, die einen Bereich (802) erfassen und ein Feld eines wahrnehmbaren Bereichs (802) aufweisen, einschließlich einer Kamera mit einem zweidimensionalen Kameraraum (504);
Fahrzeugbedienelemente, um zu bewirken, dass das Fahrzeug in dem Bereich (802) fährt;
ein Rechensystem (1410), um eines der Verfahren nach einem der Ansprüche 1 bis 13 durchzuführen.

**Revendications**

1. Procédé de génération d'un ou de plusieurs attributs d'occlusion sur la base d'informations d'objet détectées par un premier véhicule et un deuxième véhicule dans une scène, le procédé comprenant les étapes consistant à :

   recevoir (S1302) une première forme tridimensionnelle représentant un premier objet dans la scène, la première forme tridimensionnelle étant déterminée par le premier véhicule, et le premier objet étant à l'intérieur d'un premier champ de zone de perception (802) d'un ou de plusieurs capteurs du premier véhicule ;
   déterminer (S1304) que le premier objet est au moins partiellement occulté par un deuxième objet en projetant la première forme tridimensionnelle et une forme tridimensionnelle (502, 602, 702) représentant le deuxième objet sur un espace caméra bidimensionnel (504) du deuxième véhicule pour obtenir des formes bidimensionnelles respectives, et appliquer une métrique d'intersection sur l'union ou un calcul de chevauchement basé sur l'aire, sur les formes bidimensionnelles ;
   projeter (S1306) la première forme tridimensionnelle sur un espace caméra bidimensionnel (504) du deuxième véhicule pour déterminer une première forme bidimensionnelle représentant le premier objet ;
   déterminer (S1308) une deuxième forme bidimensionnelle dans l'espace caméra bidimensionnel (504) représentant le deuxième objet dans la scène,
   dans lequel l'étape consistant à déterminer la deuxième forme bidimensionnelle comprend de :

      déterminer la deuxième forme bidimensionnelle qui correspond au deuxième objet en effectuant une segmentation d'image sur une image de caméra capturée par le deuxième véhicule ;
      déterminer et stocker (S1310) un premier attribut d'occlusion indiquant que le premier objet est occulté par au moins le deuxième objet ; et
      déterminer et stocker un deuxième attribut d'occlusion indiquant dans quelle mesure la deuxième forme bidimensionnelle est à l'intérieur d'une zone (802) de la première forme bidimensionnelle.

2. Procédé selon la revendication 1, dans lequel la première forme tridimensionnelle est un hexaèdre.

3. Procédé selon la revendication 1 ou 2, dans lequel la première forme tridimensionnelle comprend des informations de coordonnées dans un repère de référence commun.

4. Procédé selon l'une quelconque des revendications 1 à 3, dans lequel l'étape consistant à déterminer la deuxième forme bidimensionnelle comprend de :

   recevoir une deuxième forme tridimensionnelle représentant le deuxième objet dans la scène, la deuxième forme tridimensionnelle étant déterminée par le deuxième véhicule ; et
   projeter la deuxième forme tridimensionnelle sur l'espace caméra bidimensionnel (504) pour déterminer la deuxième forme bidimensionnelle représentant le deuxième objet.

5. Procédé selon l'une quelconque des revendications 1 à 4, comprenant en outre les étapes consistant à :

   recevoir une ou plusieurs formes tridimensionnelles supplémentaires (502, 602, 702) représentant un ou plusieurs objets supplémentaires dans la scène, lesdites une ou plusieurs formes tridimensionnelles supplémentaires (502, 602, 702) étant déterminées par le premier véhicule ; et
   déterminer, sur la base d'une comparaison desdites une ou plusieurs formes tridimensionnelles supplémentaires (502, 602, 702) avec des formes tridimensionnelles (502, 602, 702) suivies par le deuxième véhicule, que l'un au moins desdits un ou plusieurs objets supplémentaires sont détectés par le deuxième véhicule.

6. Procédé selon l'une quelconque des revendications 1 à 5, comprenant en outre les étapes consistant à :

   recevoir une ou plusieurs formes tridimensionnelles supplémentaires (502, 602, 702) représentant un ou plusieurs objets supplémentaires dans la scène, lesdites une ou plusieurs formes tridimensionnelles supplémentaires (502, 602, 702) étant déterminées par le premier véhicule ; et

déterminer, sur la base d'une comparaison desdites une ou plusieurs formes tridimensionnelles supplémentaires (502, 602, 702) avec des formes tridimensionnelles (502, 602, 702) suivies par le deuxième véhicule, que l'un au moins desdits un ou plusieurs objets supplémentaires sont à l'extérieur d'une plage de détection du deuxième véhicule.

7. Procédé selon l'une quelconque des revendications 1 à 6, dans lequel l'étape consistant à déterminer que le premier objet est au moins partiellement occulté par le deuxième objet comprend de :

déterminer, sur la base d'une comparaison de la première forme tridimensionnelle à des formes tridimensionnelles (502, 602, 702) suivies par le deuxième véhicule, que le premier objet n'est pas encore détecté par le deuxième véhicule.

8. Procédé selon l'une quelconque des revendications 1 à 7, dans lequel l'étape consistant à projeter la première forme tridimensionnelle sur l'espace caméra bidimensionnel (504) comprend de :

transformer la première forme tridimensionnelle définie dans un repère de référence commun jusque dans un repère de référence local utilisé par le deuxième véhicule.

9. Procédé selon l'une quelconque des revendications 1 à 8, dans lequel l'étape consistant à projeter la première forme tridimensionnelle sur l'espace caméra bidimensionnel (504) comprend de :

projeter par lancer de rayons des points extérieurs de la première forme tridimensionnelle sur des coordonnées dans l'espace caméra bidimensionnel (504) du deuxième véhicule, les coordonnées définissant des points de délimitation de la première forme bidimensionnelle.

10. Procédé selon l'une quelconque des revendications 1 à 9, dans lequel l'étape consistant à projeter la première forme tridimensionnelle sur l'espace caméra bidimensionnel (504) comprend de :

fournir, à un système de vision par ordinateur, la première forme tridimensionnelle et une image de caméra capturée par un capteur d'image du deuxième véhicule à titre d'entrées ; et

déterminer, via le système de vision par ordinateur, la première forme bidimensionnelle.

11. Procédé selon l'une quelconque des revendications 1 à 10, comprenant en outre l'étape consistant à :

recevoir un ensemble d'embeddings de caractéristiques générés sur la base de données de capteurs capturées par le premier véhicule du premier objet.

12. Procédé selon l'une quelconque des revendications 1 à 11, comprenant en outre l'étape consistant à :

recevoir des informations de classification d'objet correspondant au premier objet, les informations de classification d'objet étant générées sur la base de données de capteurs capturées par le premier véhicule du premier objet.

13. Procédé selon l'une quelconque des revendications 1 à 12, comprenant en outre l'étape consistant à :

recevoir des informations d'attribut d'objet correspondant au premier objet, les informations attribut d'objet étant générées sur la base de données de capteurs capturées par le premier véhicule du premier objet.

14. Véhicule, le véhicule comprenant :

un ou plusieurs capteurs détectant une zone (802) ayant un champ de zone de perception (802), incluant une caméra ayant un espace caméra bidimensionnel (504) ;

des commandes de véhicule pour amener le véhicule à conduire dans la zone (802) ;

un système de calcul (1410) pour effectuer l'un quelconque des procédés selon l'une quelconque des revendications 1 à 13.

FIGURE 1

FIGURE 2

**FIGURE 3**

420

402

404

130₂

VIEW FROM AV 130₁

FIGURE 4A

460

130₁

404

402

VIEW FROM AV 130₂

FIGURE 4B

FIGURE 5A

FIGURE 5B

**FIGURE 6A**

**FIGURE 6B**

FIGURE 7A

FIGURE 7B

(ENLARGED) 420

604

704

802

VIEW FROM AV 130₁

# FIGURE 8

**FIGURE 9**

SENSOR DATA
902

AV STACK 950

PERCEPTION, UNDERSTANDING,
AND TRACKING 904

PREDICTION 906

PLANNING 910

CONTROLS 912

OCCLUSION
ATTRIBUTE(S)
982

OCCLUSION
ATTRIBUTE
GENERATOR
980

OCCLUDED
OBJECT
INFORMATION
986

RX 942

TX 940

REMOTE
MULTI-VIEW
DATA
MANAGEMENT
SYSTEM 984

AND/OR

130

992

130"

130'

AV STACK 950

PERCEPTION, UNDERSTANDING, AND TRACKING 904

SENSOR DATA 902

SENSOR DATA 902

TRACKED OBJECTS 1040

UNDERSTANDING 1004

TRACKING 1002

TRACKED OBJECTS 1022

CLASSES 1024

ATTRIBUTES 1026

CLASSES AND ATTRIBUTES 1050

TRACKED OBJECTS 1044

OCCLUSION ATTRIBUTE(S) 982

OCCLUDED OBJECT INFORMATION 986

PREDICTION 906

PREDICTIONS 1070

PLANNING 910

FIGURE 10

# FIGURE 11

REMOTE MULTI-VIEW DATA
MANAGEMENT SYSTEM 984

OCCLUSION
ATTRIBUTE
GENERATOR
1204

OCCLUSION
ATTRIBUTE(S)
1202

OCCLUDED OBJECT
INFORMATION 1210

AI/ML
PLATFORM 1220

$130_3$

$130_2$

$130_1$

**FIGURE 12**

RECEIVE A FIRST 3D SHAPE
REPRESENTING A FIRST OBJECT
1302

DETERMINE THAT THE FIRST
OBJECT IS AT LEAST PARTIALLY
OCCLUDED BY A SECOND
OBJECT 1304

PROJECT THE FIRST 3D SHAPE
ONTO A 2D CAMERA SPACE TO
DETERMINE A FIRST 2D SHAPE
1306

DETERMINE A SECOND 2D
HSAPE IN THE 2D CAMERA
SPACE  REPRESENTING THE
SECOND OBJECT 1308

DETERMINE A FIRST OCCLUSION
ATTRIBUTE AND SECOND
OCCLUSION ATTRIBUTE 1310

# FIGURE 13

**FIGURE 14**

**FIGURE 15**

**EP 4 517 697 B1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2019347525 A1

**Non-patent literature cited in the description**

- V2VNet: Vehicle-to-Vehicle Communication for Joint Perception and Prediction. **TSUN-HSUAN WANG et al.** ARXIV.ORG. CORNELL UNIVERSITY LIBRARY, 17 August 2020